(19) Europäisches Patentamt / European Patent Office / Office européen des brevets

(11) **EP 3 501 745 B1**

(12) **FASCICULE DE BREVET EUROPEEN**

(45) Date de publication et mention
de la délivrance du brevet:
**16.03.2022 Bulletin 2022/11**

(21) Numéro de dépôt: **18213773.7**

(22) Date de dépôt: **18.12.2018**

(51) Classification Internationale des Brevets (IPC):
**B25B 23/145** *(2006.01)*      **B23Q 17/09** *(2006.01)*
**B23P 19/06** *(2006.01)*      **B25B 23/147** *(2006.01)*

(52) Classification Coopérative des Brevets (CPC):
**B25B 23/145; B23P 19/066; B23Q 17/0957;
B23Q 17/0961; B23Q 17/0995; B25B 23/147**

(54) **PROCÉDÉ DE DÉTERMINATION DU DOMMAGE D'UN OUTIL TOURNANT, ET DISPOSITIF CORRESPONDANT**

VERFAHREN ZUR BESTIMMUNG DES SCHADENS EINES DREHWERKZEUGS, UND ENTSPRECHENDE VORRICHTUNG

METHOD FOR DETERMINING THE DAMAGE TO A ROTATING TOOL, AND CORRESPONDING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2017 FR 1763031**

(43) Date de publication de la demande:
**26.06.2019 Bulletin 2019/26**

(73) Titulaire: **ETABLISSEMENTS GEORGES
RENAULT
44800 Saint Herblain (FR)**

(72) Inventeur: **Nicolas, LE DU
44220 COUERON (FR)**

(74) Mandataire: **Vidon Brevets & Stratégie
16B, rue de Jouanet
BP 90333
35703 Rennes Cedex 7 (FR)**

(56) Documents cités:
**DE-A1- 19 820 640      DE-A1-102013 016 068
FR-A1- 3 025 125**

**Description**

**1. Domaine de l'invention**

Le domaine de l'invention est celui de la conception et de la fabrication des outils tournants industriels, comme par exemple les perceuses, les visseuses...

Plus précisément, l'invention concerne la maintenance d'un tel outil et encore plus particulièrement l'évaluation de son endommagement au fil du temps.

**2. Art antérieur**

Les visseuses et les perceuses sont couramment utilisées dans de nombreux domaines industriels, comme par exemples dans le domaine de l'industrie automobile et dans celui de l'industrie aéronautique.

Dans l'industrie automobile, des visseuses sont classiquement utilisées pour l'assemblage de véhicules ou de composants de véhicules sur des chaines d'assemblage. Ces chaines sont ponctuées de postes de travail dédiés à l'assemblage d'un composant en particulier. Ces chaines défilent à une cadence soutenue permettant d'assurer d'importants volumes de production.

Il résulte de ces conditions d'utilisation :

- d'une part, un taux d'utilisation important des visseuses (le taux d'utilisation exprime le rapport entre le temps d'utilisation de l'outil et le temps de fonctionnement de la chaine au sein de laquelle il et mis en œuvre), et
- d'autre part, la nécessité pour les services méthode ou maintenance de réduire autant que faire se peut l'apparition de pannes pour assurer la disponibilité permanente de ces outils et limiter en conséquence les périodes d'arrêt de la production compte tenu des conséquences financières que celles-ci induisent.

Dans l'industrie aéronautique, l'activité est essentiellement centrée autour de la construction de grands éléments entrant dans la constitution d'un avion tels que le fuselage, les ailes, les empennages, les volets...

Ces éléments sont en général constitués de coques minces formant la peau extérieure de l'avion. Ces coques sont fixées sur des cadres ou des nervures pour les rigidifier.

Pour réaliser la fixation des coques sur leurs cadres et/ou nervures, un grand nombre de contreperçages est réalisé (perçage simultané de la coque et du cadre et/ou nervure), de sorte à ménager des trous destinés à recevoir des vis ou des rivets pour maintenir la coque solidaire du cadre et/ou nervure.

Dans l'industrie aéronautique, comme dans celui de l'automobile, les outils sont soumis à un fort taux d'utilisation et la panne n'est pas permise.

Au cours de leur mise en œuvre, ces outils subissent essentiellement deux types de défaillances mécaniques à savoir :

- la rupture par fatigue, et
- l'usure par frottement.

La rupture par fatigue d'un composant se produit à la suite de l'application périodiquement sur celui-ci d'une contrainte mécanique un grand nombre de fois, cette contrainte variant entre une valeur maximum et une valeur minimum.

Un procédé pour la surveillance de l'état de fatigue est divulgue dans le document DE 10 2013 016068 A1.

Ce phénomène conduit à l'apparition de fissures dans la structure du composant qui au bout d'un certain nombre de cycles de montée et descente en contrainte provoque la rupture du composant soumis à ces contraintes.

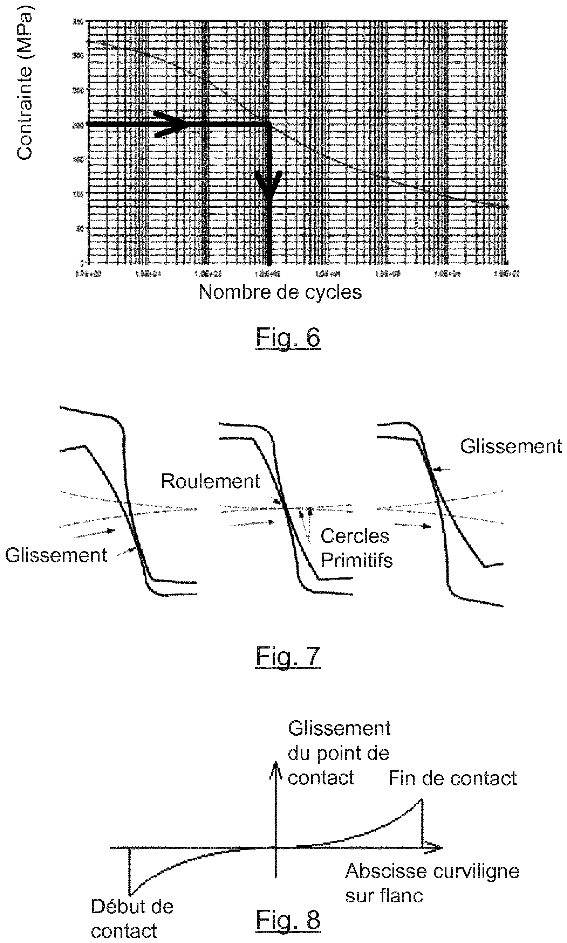

Ce phénomène concerne en particulier les aciers. Il est décrit par la courbe de Wöhler, telle que celle illustrée à la figure 6, qui exprime la valeur de la contrainte de rupture pour un nombre donné de cycles. Cette courbe permet ainsi de connaître le nombre de cycles pendant lesquels un composant peut être soumis à une contrainte de valeur donnée avant de rompre.

Une courbe de Wöhler est propre à une matière et est obtenue à la suite d'expérimentations en laboratoire.

La courbe de Wöhler comprend trois zones allant des contraintes les plus fortes aux contraintes les plus faibles, à savoir :

- la zone de fatigue oligo-cyclique où la contrainte est proche de la limite élastique de la matière et où la rupture se produit suite à une exposition à un faible de nombre de cycles ;
- une zone centrale où la rupture se produit suite à une exposition à un grand nombre de cycles ;
- une zone asymptotique correspondant un niveau de contrainte pour lequel le nombre de cycles supportables par le composant est infini. Ce niveau est appelé limite d'endurance.

Plus le nombre de cycles de montée et descente en contrainte qu'un composant a supporté durant sa vie est important, plus la contrainte qu'il est capable de supporter est faible, et vice versa.

Au sein d'une visseuse ou d'une perceuse, de nombreux composants sont soumis à de la fatigue mécanique, comme par exemple les pignons d'engrenage de la transmission assurant la liaison entre les moyens moteurs et l'organe terminal rotatif de l'outil.

Une dent d'un pignon doit supporter une telle fatigue. La contrainte minimum subit par une dente a une valeur nulle puisque lorsque cette dent n'est plus en contact avec une autre, elle ne supporte plus de contrainte.

Les conséquences d'une rupture de dent d'engrenage peuvent être graves pour l'outil puisque le déplacement d'une dent cassée dans l'outil occasionne la destruction du reste de la transmission.

Une contrainte mécanique à laquelle est exposé un composant lors de la mise en œuvre d'une opération peut être essentiellement fixe au cours de l'opération considérée si l'opération est un perçage par exemple ou variable si l'opération considérée est un serrage par exemple. Lorsqu'un outil est utilisé pour la mise en œuvre d'opérations successives différentes, la contrainte mécanique à laquelle un composant est exposé d'une opération à l'autre peut être différente.

Une contrainte en fatigue peut être alternée auquel cas la valeur minimum est négative et a une valeur absolue non nulle. C'est ce type de sollicitation que subit un arbre soumis à une flexion rotative.

La règle de Miner permet de suivre le dommage par fatigue subit par un composant exposé cycliquement à des contraintes mécaniques d'intensités variables.

La règle de Miner concerne les sollicitations en fatigue où les valeurs contraintes maximum ou minimum ne sont pas constantes d'un cycle au suivant. Les sollicitations auxquelles sont exposés les outils rentrent dans cette catégorie.

Pour évaluer la progression d'un dommage occasionné dans un composant par de la fatigue, la règle de Miner propose de considérer que :

- le dommage généré par un cycle de fatigue d'une contrainte donnée correspond à l'inverse du nombre de fois qu'il faut répéter ce cycle pour aboutir à la rupture du composant ;
- le dommage généré par une succession de cycles de contraintes variées correspond à la somme des dommages de chacun de ces cycles et la rupture du composant survient lorsque cette somme est égale à 1.

L'usure par frottement se produit lorsque deux pièces, maintenues en contact sous l'effet d'une pression, se déplacent l'une par rapport à l'autre. L'usure se traduit par l'abrasion des surfaces en contact.

Ce phénomène affecte par exemple les flancs de dents d'engrenages qui par conception peuvent présenter un glissement spécifique.

Ce phénomène d'usure par frottement a pour conséquence la génération de particules métalliques qui viennent dégrader la qualité de la lubrification d'un mécanisme et encore accentuer l'usure de celui-ci.

La loi d'Archard décrit ce phénomène par la formule suivante :

$$Q = Ku.W.L/H$$

Avec:

Q : volume de débris produit par le phénomène d'usure
Ku : constante sans dimension déterminée expérimentalement
W: force d'application d'une surface sur l'autre perpendiculairement aux surfaces
L : distance de glissement
H : dureté de la surface la plus tendre

Pour assurer la disponibilité permanente des outils en production, des plans de maintenance sont mis en œuvre par les services méthode des entreprises.

Ces services mettent en œuvre des processus d'évaluation de l'endommagement des outils de sorte à programmer leur remplacement ou celui de leurs composants au moment le plus opportun pour réduire le risque de panne et augmenter au maximum leur taux d'utilisation pour optimiser la productivité.

A titre d'exemple, le document FR2882287 décrit un procédé de contrôle de l'endommagement d'une visseuse en utilisant le spectre de fréquence du signal du capteur de couple intégré à celle-ci.

Les raies fréquentielles présentes dans le spectre sont le résultat de vibrations générées par les composants mécaniques présents dans la visseuse. L'amplitude d'une raie est le reflet des vibrations produites par le composant associé. La surveillance de l'évolution de l'amplitude d'une raie permet de suivre l'évolution de l'état d'usure du composant.

Cette solution permet donc de détecter le stade à partir duquel un composant génère un niveau de vibration anormal impliquant une maintenance prochaine. Ce type de moyen permet d'optimiser la maintenance, il reste cependant complexe à mettre en œuvre.

Une autre solution d'évaluation de l'endommagement d'un outil consiste à compter le nombre de cycles de vissage ou de perçage réalisés au moyen d'un outil pour évaluer le taux d'usage de celui-ci. Ainsi, si un outil est conçu pour réaliser un nombre de cycles prédéterminé, il sera remplacé lorsque le nombre de cycles qu'il aura réalisé deviendra égal à ce nombre de cycle prédéterminé.

Une telle solution d'évaluation de l'usure est relativement efficace. Elle ne tient toutefois pas compte du taux de sollicitation réels des outils. En effet, un même outil peut être utilisé pour réaliser des serrages successifs à des couples de serrage différents compris dans une plage large. Ainsi, le rapport entre les couples de serrage maximum et minimum auxquels un même outil peut serrer un assemblage peut être de l'ordre de 5 par exemple. Autrement dit, un même outil, suivant l'application pour laquelle il est utilisé, peut subir des efforts très différents.

En outre, pour un couple de serrage donné, deux assemblages différents peuvent nécessiter des angles de serrage (angle de rotation de la vis durant la montée en couple) très différents. Or plus l'angle de rotation est important plus la transmission est sollicitée.

Le couple de serrage et l'angle de serrage, qui sont propres à chaque application, ont des conséquences directes sur la fatigue et l'usure par frottement des outils. La seule comptabilisation du nombre de cycles au cours desquels un outil est mis en œuvre pour évaluer son niveau d'endommagement, qui ne tient pas compte de ces deux paramètres, est donc relativement imprécise ou à tout le moins non optimale. Elle peut en effet conduire au remplacement d'outils ou de composants non encore endommagés ou au pire à ne pas détecter suffisamment tôt l'endommagement d'un outil ou d'un composant si bien que celui-ci rompt avant d'être remplacé en dehors des phases de maintenances classiques induisant une baisse de productivité.

Les méthodes d'évaluation de l'endommagement d'un outil à disposition des services de maintenance ne donnent pas une image précise du niveau d'endommagement réel des outils et obligent ces services à prendre des coefficients de sécurité importants induisant un raccourcissement de la fréquence de maintenance des outils.

Ceci ne permet pas une utilisation optimisée des outils et occasionne des surcoûts, et une baisse de productivité.

Au final, les solutions de l'art antérieur peuvent encore être améliorées afin de permettre une évaluation plus précise de l'endommagement d'un outil et d'améliorer la productivité.

## 3. Objectifs de l'invention

L'invention a notamment pour objectif d'apporter une solution efficace à au moins certains de ces différents problèmes.

En particulier, selon au moins un mode de réalisation, un objectif de l'invention est de fournir une technique permettant d'optimiser la maintenance des outils tournants.

Notamment, l'invention a pour objectif, selon au moins un mode de réalisation, de fournir une technique d'évaluation de l'endommagement d'un outil tournant qui permette d'évaluer le niveau d'endommagement qu'un outil a subi par son utilisation, ou à tout le moins de manière plus simple et fiable que cela est permis par les techniques de l'art antérieur.

Un autre objectif de l'invention est, selon au moins un mode de réalisation, de fournir une telle technique qui permette d'alerter l'utilisateur si le niveau d'endommagement qu'a subi l'outil ou l'un de ses composants impose une opération de maintenance.

Un autre objectif de l'invention est de procurer, dans au moins un mode de réalisation, une telle technique qui soit simple et/ou économique à mettre en œuvre et/ou fiable et/ou efficace.

## 4. Présentation de l'invention

Pour ceci, l'invention concerne un procédé d'évaluation d'un dommage par fatigue et/ou d'un dommage par usure d'un outil tournant selon la revendication 1.

Ainsi, l'invention repose sur une approche originale qui consiste à évaluer le niveau d'endommagement d'un outil causé par de la fatigue et/au causé par de l'usure en tenant compte du couple supporté par la transmission de cet outil ainsi que de l'angle de rotation de sa transmission.

Ceci permet d'évaluer de manière précise et proche de la réalité le niveau d'endommagement d'un outil. Celui-ci peut alors être stoppé pour maintenance uniquement lorsque cela s'avère réellement nécessaire. L'invention permet ainsi d'augmenter le taux d'utilisation de l'outil et d'augmenter la productivité.

Selon une caractéristique possible, ladite étape de détermination dudit dommage par fatigue et/ou dudit dommage par usure comprend une étape de comparaison dudit au moins un dommage par fatigue et/ou dudit dommage par usure avec un seuil d'alerte prédéterminé au-delà duquel le composant particulier considéré doit être remplacé, ledit procédé comprenant une étape d'émission d'une alerte dès que l'un desdits dommages d'un desdits composants atteint le seuil d'alerte prédéterminé correspondant.

Selon une caractéristique possible, ladite étape de détermination de dommage par fatigue par cycle d'au moins un desdits composants au cours d'un cycle est telle que :

- ledit composant pris en considération est une dent d'un pignon,
- ladite période angulaire prédéterminée correspond à la rotation du pignon d'un angle correspondant à une dent,
- le dommage par fatigue par cycle est égal à la somme des dommages élémentaires par fatigue déterminés au cours du cycle sur la base de ladite période angulaire multiplié par le nombre de fois où ladite dent est sollicitée par tour de pignon et divisé par le nombre de dents dudit pignon.

Selon une caractéristique possible, ladite étape de détermination de dommage par fatigue par cycle d'au moins un desdits composants au cours d'un cycle est telle que :

- ledit composant pris en considération est un arbre soumis à une flexion rotative,
- ladite période angulaire prédéterminée correspond à un tour de rotation dudit arbre,
- le dommage par fatigue par cycle est égal à la somme des dommages élémentaires par fatigue déterminés au cours du cycle sur la base de ladite période angulaire.

Selon une caractéristique possible, ladite étape de détermination de dommage par usure d'au moins un desdits composants au cours d'un cycle comprend la mise en œuvre selon une période angulaire prédéterminée au cours ou à l'issue dudit cycle :

- d'une étape de détermination de la valeur du couple Cj transmis par ledit composant ;
- d'une étape de détermination d'un dommage élémentaire par usure comme étant égale au produit du couple Cj par une constante prédéterminée.

Selon une caractéristique possible, ladite étape de détermination de dommage par usure par cycle d'au moins un desdits composants au cours d'un cycle est telle que :

- ledit composant pris en considération est une dent d'un pignon ;
- ladite période angulaire prédéterminée correspond à la rotation du pignon d'un angle correspondant à une dent ;
- le dommage par usure par cycle est égal à la somme des dommages élémentaires par usure déterminés au cours du cycle sur la base de ladite période angulaire multiplié par le nombre de fois où ladite dent est sollicitée par tour de pignon et divisé par le nombre de dents dudit pignon.

Selon une caractéristique possible, un procédé selon l'invention comprend une étape de détermination d'au moins un état d'usage par fatigue et/ou d'un état d'usage par usure dudit outil ou dudit composant, ledit état d'usage par fatigue et/ou ledit état d'usage par usure étant égal au rapport en % entre le dommage par fatigue et le seuil d'alerte par fatigue et/ou entre le dommage par usure et le seuil d'alerte par usure prédéterminé au-delà duquel ledit composant doit être remplacé.

Selon une caractéristique possible, ledit seuil d'alerte prédéterminé correspond à l'énergie fournie par ledit outil pour satisfaire au test de durabilité effectué lors de sa validation technique.

Selon une caractéristique possible, un procédé selon l'invention comprend une étape de remplacement d'un composant lorsque l'état d'usage de celui-ci atteint ou dépasse le seuil d'alerte prédéterminé correspondant, et une étape de mise à zéro dudit état d'usage associé audit composant après remplacement de celui-ci.

L'invention concerne également un dispositif d'évaluation d'un dommage par fatigue et/ou d'un dommage par usure d'un outil tournant selon la revendication 9.

Selon une caractéristique possible, lesdits moyens de détermination dudit dommage par fatigue et/ou dudit dommage par usure comprennent des moyens de comparaison dudit au moins un dommage par fatigue et/ou dudit dommage par usure avec un seuil d'alerte prédéterminé au-delà duquel le composant particulier considéré doit être remplacé, ledit dispositif comprenant des moyens d'émission d'une alerte dès que l'un desdits dommages d'un desdits composants atteint le seuil d'alerte prédéterminé correspondant.

Selon une caractéristique possible, lesdits moyens de détermination de dommage par fatigue par cycle d'au moins un desdits composants au cours d'un cycle sont configurés de telle sorte que :

- ledit composant pris en considération est une dent d'un pignon,

- ladite période angulaire prédéterminée correspond à la rotation du pignon d'un angle correspondant à une dent,
- le dommage par fatigue par cycle est égal à la somme des dommages élémentaires par fatigue déterminés au cours du cycle sur la base de ladite période angulaire multiplié par le nombre de fois où ladite dent est sollicitée par tour de pignon et divisé par le nombre de dents dudit pignon.

Selon une caractéristique possible, lesdits moyens de détermination de dommage par fatigue par cycle d'au moins un desdits composants au cours d'un cycle sont configurés de telle sorte que :

- ledit composant pris en considération est un arbre soumis à une flexion rotative,
- ladite période angulaire prédéterminée correspond à un tour de rotation dudit arbre,
- le dommage par fatigue par cycle est égal à la somme des dommages élémentaires par fatigue déterminés au cours du cycle sur la base de ladite période angulaire.

Selon une caractéristique possible, lesdits moyens de détermination de dommage par usure d'au moins un desdits composants au cours d'un cycle sont configurés pour mettre en œuvre selon une période angulaire prédéterminée au cours ou à l'issue dudit cycle :

- des moyens de détermination de la valeur du couple Cj transmis par ledit composant ;
- des moyens de détermination d'un dommage élémentaire par usure comme étant égale au produit du couple Cj par une constante prédéterminée.

Selon une caractéristique possible, lesdits moyens de détermination de dommage par usure par cycle d'au moins un desdits composants au cours d'un cycle sont configurés de telle sorte que :

- ledit composant pris en considération est une dent d'un pignon ;
- ladite période angulaire prédéterminée correspond à la rotation du pignon d'un angle correspondant à une dent ;
- le dommage par usure par cycle est égal à la somme des dommages élémentaires par usure déterminés au cours du cycle sur la base de ladite période angulaire multiplié par le nombre de fois où ladite dent est sollicitée par tour de pignon et divisé par le nombre de dents dudit pignon.

Selon une caractéristique possible, un tel dispositif comprend des moyens de détermination d'au moins un état d'usage par fatigue et/ou d'un état d'usage par usure dudit outil ou dudit composant, ledit état d'usage par fatigue et/ou ledit état d'usage par usure étant égal au rapport en % entre le dommage par fatigue et le seuil d'alerte par fatigue et/ou entre le dommage par usure et le seuil d'alerte par usure prédéterminé au-delà duquel ledit composant doit être remplacé.

Selon une caractéristique possible, ledit seuil d'alerte prédéterminé correspond à l'énergie fournie par ledit outil pour satisfaire au test de durabilité effectué lors de sa validation technique.

Selon une caractéristique possible, un tel dispositif comprend des moyens de mise à zéro de l'état d'usage d'un composant après remplacement de celui-ci.

## 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :

- la figure 1 illustre une vue en coupe longitudinale d'une visseuse selon l'invention ;
- la figure 2 illustre le schéma d'un contrôleur ;
- la figure 3 illustre les sollicitations d'une dent au cours d'un perçage ;
- la figure 4 illustre les sollicitations d'une dent au cours d'un vissage ;
- la figure 5 illustre les sollicitations d'un engrenage à 6 dents au cours d'un cycle ;
- la figure 6 illustre une courbe de Wöhler ;
- les figures 7 à 9 illustrent le contact et les efforts entre deux dents ;
- la figure 10 illustre la variation de couple au cours d'un vissage ;
- la figure 11 illustre un exemple de procédé selon l'invention ;
- la figure 12 illustre un deuxième exemple de procédé selon l'invention.

**6. Description de modes de réalisation particuliers**

**6.1. Structure générale**

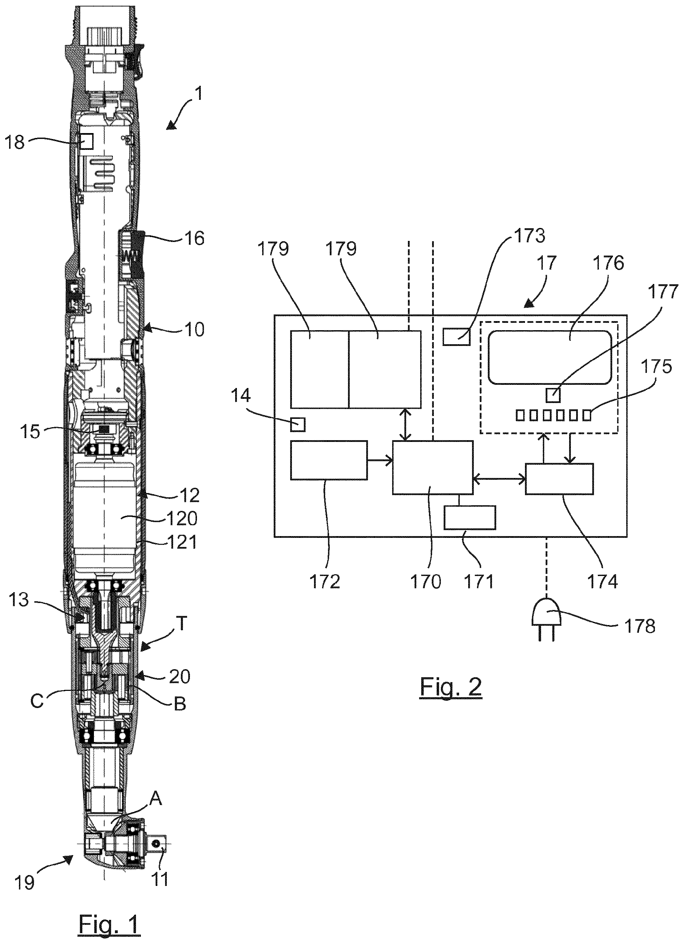

On présente en relation avec les figures 1 à 10 un exemple d'outil tournant 1 selon l'invention.

Il s'agit par exemple d'une visseuse ou d'une perceuse, ou d'un autre type d'outil tournant. L'outil décrit ici est un outil portatif. Il pourrait toutefois s'agir d'un outil porté par un bâti.

Un tel outil 1 comprend un carter 10 à l'extrémité duquel un organe terminal 11 est monté mobile en rotation seulement s'il s'agit d'une visseuse, ou éventuellement en rotation et en translation selon un même axe s'il s'agit d'une perceuse.

Ce carter 10 loge une transmission T et des moyens moteurs 12 susceptibles d'entrainer en mouvement l'organe terminal 11 via la transmission T.

La transmission T comprend une réduction intégrant ici des trains épicycloïdaux.

Les moyens moteurs 12 et la transmission T sont connus en soit et ne sont pas décrits plus en détail ici.

L'organe terminal 11 est susceptible de porter un embout de vissage ou un outil de coupe comme un foret.

Les moyens moteurs comprennent ici un moteur électrique synchrone muni d'un rotor 120 et d'un stator 121. Dans le cas d'une perceuse à avance automatique, deux moteurs pourront être mis en œuvre, l'un pour l'entrainement en rotation de l'organe terminal, l'autre pour son entrainement en translation.

L'outil 1 comprend des moyens de mesure d'effort, notamment d'au moins une information représentative du couple de sortie de l'outil (couple de serrage d'une visseuse ou du couple appliqué à un foret en action de perçage d'une perceuse. Il peut par exemple s'agir d'un ou plusieurs capteurs 13 à élément déformant et à jauges de contrainte usuellement utilisés dans les visseuses pour contrôler le couple de serrage sur la vis. Il peut encore s'agir d'un ou de plusieurs capteurs 14, placés dans le contrôleur, mesurant le courant consommé par le moteur ou les moteurs, comme cela est classiquement mis en œuvre dans les perceuses pour mesurer le couple appliqués sur le foret en action de perçage.

L'outil 1 comprend des moyens de mesure de mouvement, notamment d'un angle de rotation. Il peut s'agir de capteur d'angle 15 du moteur électrique, utilisé pour permettre le contrôle de l'alimentation électrique du moteur et pour mesurer l'angle de rotation de la vis dans le cadre du vissage. Ce capteur d'angle permet de mesurer l'angle de rotation du rotor 120 par rapport au stator 121.

L'outil 1 comprend, lorsqu'il est de type portatif, une gâchette 16 sur laquelle un opérateur peut agir pour commander une opération de vissage ou de perçage. Il peut alternativement ou en combinaison comprendre des moyens de pilotage à distance comme un contrôleur 17, connus en soi, notamment dans le cas des outils dits fixes portés par un bâti.

L'outil 1 comprend un contrôleur 17. Ce contrôleur 17 peut être interne ou externe à l'outil. Il permet de commander l'outil pour mettre en œuvre des stratégies de vissage ou perçage préprogrammées.

S'il n'est pas intégré à l'outil, le contrôleur y est relié par voie filaire.

Dans le cas des outils reliés par câble(s) au contrôleur, celui-ci permet de manière connue en soit d'assurer l'alimentation en énergie de l'outil.

Dans le cas d'un outil sans fil, la source d'alimentation électrique de celui-ci peut comprendre une ou plusieurs batteries.

Le contrôleur 17 comprend notamment une unité de traitement 170 équipée par exemple d'un microprocesseur, une mémoire vive 171, une mémoire morte 172 contenant un programme d'ordinateur comprenant des instructions de code de programme pour l'exécution d'un procédé de vissage ou perçage, ou plus généralement d'un procédé selon l'invention.

Les moyens nécessaires à l'exécution du procédé selon l'invention peuvent être intégré dans l'outil ou dans le contrôleur.

Si le contrôleur n'est pas relié à l'outil par câble, alors il comprend un module d'émission/réception 173 sans fil lui permettant de communiquer avec l'outil.

Grace à la communication entre l'outil et le contrôleur, qu'elle soit filaire ou non, le contrôleur peut :

- recevoir des signaux délivrés par les différents moyens de mesure (capteur) intégrés à l'outil ;
- émettre des commandes vers l'outil.

Le contrôleur peut communiquer avec d'autres équipements tel qu'un réseau informatique de façon filaire.

L'outil comprend également un module d'émission/réception 18 pour communiquer avec le contrôleur.

Le contrôleur comprend également une interface d'entrée-sortie 174, une interface utilisateur pour gérer un moyen d'introduction de commande 175 (clavier, écran tactile, souris, ...), un moyen d'affichage 176 (écran, afficheur, voyant lumineux) et éventuellement, un moyen d'émission d'un signal sonore 177 sur une fréquence audible, un connecteur 178 pour l'alimentation électrique.

Le contrôleur comprend encore un ou plusieurs onduleurs 179 pour alimenter les moyens moteurs.

**6.2. Paramétrage préalable**

**6.2.1. Aspects généraux**

L'invention vise à déterminer l'endommagement par fatigue et/ou par usure d'un outil tournant qui dépend du niveau de sollicitation auquel l'outil est soumis au fil de ses utilisations.

Les niveaux de sollicitation ne sont pas homogènes dans un outil dans la mesure où les différents composants entrant dans la chaine de transmission des efforts depuis les moyens moteurs vers l'organe terminal peuvent être différents d'un composant à un autre. Certains composants sont davantage sollicités en fatigue qu'en usure ou inversement. La conception d'un outil oblige parfois à reprendre des composants standard pour certaines zones de l'outil afin de réduire le prix de revient de ces outils ou encore le nombre de références à stocker. Pour d'autres composants, la conception oblige à réduire les coefficients de sécurité pour minimiser la masse et l'encombrement de l'outil et à concevoir en conséquence des composants spécifiques.

Il en résulte que le dommage par fatigue et que le dommage par usure peuvent évoluer différemment d'un composant à un autre.

Bien qu'il soit possible de suivre le dommage par usure et le dommage par fatigue de chaque composant sollicité dans outil, il est possible de simplifier le système en ne suivant les dommages causés que sur les composants les plus sollicités.

Auquel cas la surveillance va concerner des sous-ensembles fonctionnels (par exemple sous-ensembles boite de vitesse, sous-ensemble train épicycloïdale, sous-ensemble renvoi d'angle...), le suivi d'un composant, notamment le plus sollicité, d'un sous-ensemble permettant de connaître le niveau d'endommagement du sous-ensemble correspondant. L'opération de maintenance consistera à changer le sous-ensemble entier lorsque le dommage du composant le plus sollicité de ce sous-ensemble aura atteint un seuil d'alerte prédéterminé.

Ceci permet de réduire la puissance de calcul nécessaire à l'évaluation des dommages.

L'identification des composants les plus sollicités, ainsi que la sélection des données et des algorithmes nécessaires au calcul de son endommagement sont réalisées au moment de la conception de l'outil.

De manière classique, un outil industriel est mis en œuvre pour réaliser des opérations successives de travail comme par exemple de vissage ou de perçage. Chaque opération constitue un cycle. Au cours de chaque cycle, un composant peut être sollicité plusieurs fois, c'est-à-dire qu'il peut-être soumis à plusieurs reprises à des contraintes.

Les moyens moteurs transmettent à l'organe terminal une puissance sous la forme d'une rotation caractérisée par un couple et une fréquence de rotation (cas du vissage et du perçage) et d'une translation caractérisée par une force et une vitesse (cas du perçage).

Ces puissances passent au travers de la transmission (encore appelée chaine de transmission) pouvant intégrer divers composants comme par exemples des trains épicycloïdaux, des trains d'engrenages parallèles ou des engrenages d'angle...

Les composants de cette transmission supportant des efforts susceptibles de générer des dommages sont essentiellement :

- les dents d'engrenage ;
- les paliers de satellite, de tête d'angle ou encore de moteur.

Par nature, les dents d'engrenage engrènent de façon périodique pour transmettre la puissance de l'outil, elles sont donc sollicitées de façon cyclique.

Cette sollicitation se traduit par une force de contact entre les deux dents engagées, se déplaçant le long du profil de la denture au niveau du point de contact.

Le profil de cette force, c'est-à-dire son amplitude et son inclinaison par rapport au flanc de dent dépend seulement :

- du couple transmis par l'engrenage durant l'engagement des deux dents ;
- de la géométrie des engrenages ;
- de la lubrification entre les engrenages.

Les paliers eux peuvent être sollicités :

- soit de façon périodique telle que le sont les arbres de tête d'angle en flexion rotative ;

- soit de façon continue telle que le sont les paliers de satellite de trains épicycloïdaux.

Lorsque la sollicitation est périodique, elle s'exprime en fonction de l'angle de rotation de la transmission mesuré par le capteur d'angle du moteur. Par exemple, telle dent de tel engrenage d'un train épicycloïdal va être sollicitée un nombre prédéterminé de fois par tour du moteur. En d'autres termes, elle est sollicitée à chaque fois que le rotor tourne par rapport au stator d'un angle d'une valeur donnée.

L'amplitude de ces sollicitations peut aussi être variable suivant la nature du travail réalisé :

- dans le cas d'un perçage, l'amplitude de la sollicitation va être sensiblement constante ;
- dans le cas d'un vissage, l'amplitude va être croissante d'une façon sensiblement linéaire.

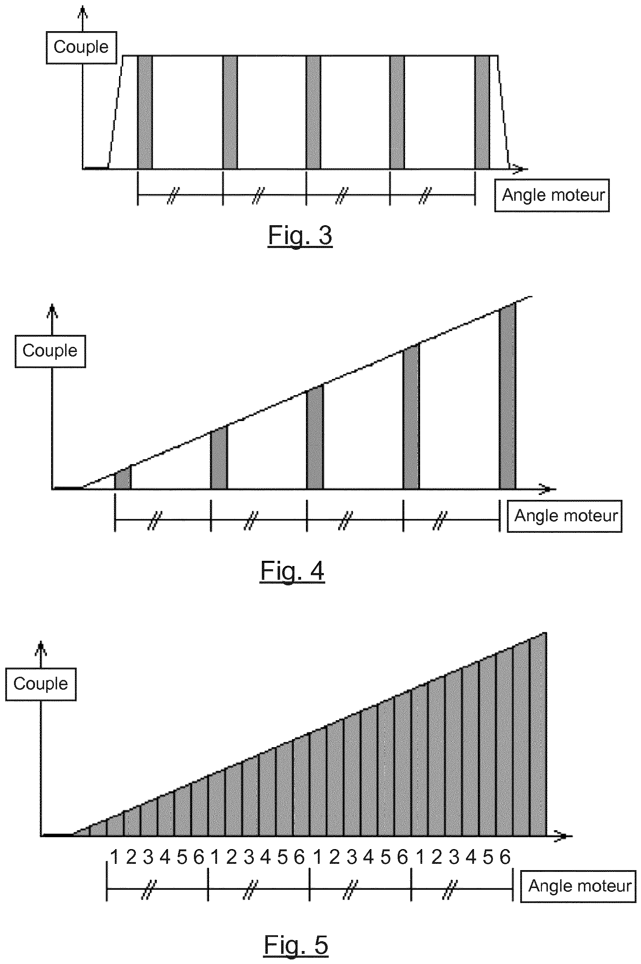

Ainsi, dans le cas d'un perçage, une dent d'un engrenage sera sollicitée de la façon présentée sur le graphe illustré à la figure 3, c'est-à-dire avec une amplitude constante tant que le foret perce une matière donnée.

Dans le cas d'un vissage, une dent d'un engrenage sera sollicitée de la façon présentée sur le graphe illustré à la figure 4, c'est-à-dire avec une amplitude croissante jusqu'à la fin du serrage.

La sollicitation d'une dent à couple constant est en fait un cas particulier de la sollicitation à couple variable et c'est ce dernier qui va être pris en considération dans la suite de la description.

Le graphe illustré à la figure 5 représente, à titre d'exemple, la sollicitation des dents d'un engrenage à six dents lors de la montée en couple d'un vissage.

Dans ce cas, il peut par exemple s'agir d'un pignon d'angle à six dents d'une visseuse, faisant 4,6 tours lors de la montée en couple au cours d'un cycle et chaque dent ne subissant qu'un engagement par tour de pignon.

Ainsi que cela va être expliqué par la suite, durant chaque sollicitation, une dent subie un dommage élémentaire en usure et un dommage élémentaire en fatigue.

Ces dommages dépendent :

- de paramètres fixes pour un outil donné tel que conception et lubrification de la transmission, géométrie de la denture... ;
- d'un paramètre variable tel que le niveau de couple transmis par l'engrenage.

Il en résulte que pour une dent donnée dans un outil donné, les dommages en usure et les dommages en fatigue ne dépendent en temps réel que du niveau de couple transmis par l'engrenage.

Pour un cycle de travail produit par l'outil, par exemple un vissage, les dommages par cycle en usure et ceux en fatigue subis par une dent donnée au cours du cycle correspondent à la somme des dommages élémentaires résultant chacun d'une sollicitation figurant sur la figure 4.

Or, compte tenu de la position angulaire aléatoire de la transmission en début de vissage, les sollicitations débutent de façon aléatoire par rapport au début de la montée en couple.

Il en résulte qu'il n'est pas possible avec des moyens simples d'évaluer les dommages de façon juste pour chaque cycle de vissage.

Cependant, compte tenu :

- du grand nombre de cycles sur la base duquel est effectuée l'évaluation de l'endommagement de l'outil ;
- du fait qu'un outil est en général utilisé pour une application donnée de vis et répète ainsi souvent les mêmes types de vissage (même couple final et même élasticité d'assemblage) ;

et si l'on considère l'exemple de la figure 5, c'est-à-dire une montée en couple sollicitant un engrenage de six dents, la probabilité veut que une même dent sera sollicitée parmi les six autres dents en début de montée en couple soit en 1er ; soit en 2ème; soit en 3ème; soit en 4ème; soit en 5ème; soit en 6ème et ceci un de fois homogène pour les six positions.

Il est ainsi possible d'attribuer à chaque cycle un dommage moyen en fatigue et /ou un dommage moyen en usure correspond à la somme des dommages résultant de chaque sollicitation de la figure 5 divisé par le nombre de dents du pignon, soit divisé ici par 6.

Cette évaluation moyenne du dommage, à défaut d'être juste pour un cycle, permet par son cumul sur un grand nombre de cycles de donner une évaluation globale juste du dommage.

Le choix de raisonner en présentant l'engagement de la dent suivant 6 positions distinctes permet de faciliter la présentation de la solution. Dans la réalité, l'engagement d'une dent donnée prend une infinité de positions quelconques réparties entre ces 6 positions.

Cette facilité n'affecte pas la qualité du raisonnement, le résultat serait le même si l'on considérait une infinité de positions d'engament de dent.

Par ailleurs, si la dent considérée est portée par un solaire de train épicycloïdal, alors elle subit autant d'engagement qu'il y a de satellites dans le train. Dans ce cas, il faut multiplier le résultat précédent par le nombre de sollicitations que la dent subit dans un tour de solaire.

La manière de déterminer un dommage par fatigue et un dommage par usure selon l'invention va à présent être détaillée.

### 6.2.2. Dommage par fatigue

Il est fait ici l'hypothèse que la règle de Miner s'applique aux sollicitations en fatigue des outils industriels.

Ceci est d'autant plus vrai que la distribution chronologique des contraintes est mélangée, ainsi un serrage de vis contient des contraintes fortes et faibles.

Pour un composant donné, en particulier un engrenage, la fatigue s'applique à une dent lorsque celle-ci s'engage et se désengage avec une autre dent d'un autre engrenage pour transmettre un couple.

La contrainte trouve son niveau maximum à la base de la dent, à l'endroit où le flanc de dent se raccorde avec le diamètre de fond de dent.

Deux types de rupture peuvent se produire :

- une rupture où la fissure suit le diamètre de fond de dent et celle-ci se détache de l'engrenage ;
- une rupture où la fissure se propage depuis le pied de dent vers un alésage que peut intégrer l'engrenage, typiquement dans le cas des satellites de train épicycloïdal.

Ainsi, la contrainte que subit la dent est directement proportionnelle au couple produit par une visseuse sur la vis à serrer ou par une perceuse sur le foret dans le cadre d'un perçage.

Le coefficient de proportionnalité de cette contrainte en fonction du couple mesuré par les moyens de mesure est calculé lors de la conception de l'outil.

Il en résulte que le dommage par fatigue d'un composant dans la chaine de transmission est proportionnel au niveau de contrainte $C_i$ supporté par celui-ci, lequel est proportionnel au couple transmis par la transmission.

Le niveau de contrainte $C_i$ supporté par une dent est évalué à partir du couple $C_j$ supporté par la transmission mesuré par les moyens de mesure d'une information représentative du couple de sortie de l'outil (couple de serrage dans le cas d'une visseuse ou couple supporté par le foret dans le cas d'une perceuse) selon la formule :

$$C_i = K'.C_j$$

Avec:

$C_i$ : le niveau de contrainte supporté par la dent
$K'$ : une constante dépendant de la conception de la transmission de l'outil
$C_j$ : le couple mesuré par les moyens de mesure d'une information représentative du couple de sortie

La constante $K'$ est déterminée lors de la conception de l'outil en fonction des moyens de mesure d'une information représentative du couple de sortie et de la transmission. Plus précisément, sachant à quel endroit de la transmission le composant dont on souhaite évaluer le dommage par fatigue est placé et à quel endroit de la transmission les moyens de mesure permettent de mesurer un couple, on détermine la valeur de $K'$.

A partir de la contrainte $C_i$ appliquée au composant, on détermine, à chaque sollicitation du composant, le dommage élémentaire par fatigue du composant résultant de la sollicitation de celui-ci par la contrainte de valeur $C_i$.

Pour cela, la courbe de Wöhler du composant, qui est déterminée lors de la conception de l'outil, est prise en compte.

Cette courbe traduit, pour différents niveaux de contrainte, le nombre de cycles $N_{ci}$ que le composant peut subir en étant sollicité à chacune de ces contraintes avant de rompre.

La prise en considération de la courbe de Wöhler d'un composant permet ainsi de déterminer le dommage élémentaire par fatigue D de ce composant résultant d'une sollicitation $C_i$ selon la formule :
$D = 1 / N_{ci}$

Avec:
D : le dommage par fatigue du composant lors d'une sollicitation

$N_{ci}$ : le nombre de cycles que le composant soumis à une sollicitation $C_i$ peut subir avant rupture

Si le niveau de contrainte est inférieur à la limite d'endurance alors $N_{ci}$ est infini et le dommage lors de la sollicitation est nul.

Par opposition, si le niveau de contrainte est proche de la limite élastique de la matière du composant, le dommage du composant va approcher rapidement d'un seuil d'alerte prédéterminé au-delà duquel il est considéré que le composant est à changer.

Ainsi, on est capable, pour un composant considéré, de calculer le dommage élémentaire par fatigue causé par une sollicitation de celui-ci au cours d'un cycle.

A partir des dommages par fatigue élémentaires causés à un composant au cours d'un cycle, il est possible d'évaluer le dommage par fatigue par cycle subi par le composant considéré au cours de l'ensemble du cycle, en l'occurrence une dent d'engrenage.

Pour cela, on détermine au cours d'un cycle, selon une période angulaire prédéterminée, le niveau de sollicitation que subit le composant considéré chaque fois qu'il est sollicité. Pour chacune de ces sollicitations, le dommage élémentaire correspondant est calculé. Puis, à chaque cycle, le dommage par cycle est calculé en tenant compte de la somme des dommages élémentaires au cours du cycle.

Lorsque le composant pris en considération est une dent d'un pignon, la période angulaire prédéterminée correspond à la rotation du pignon d'un angle correspondant à une dent.

A l'issue du cycle de travail fourni par l'outil, le dommage par fatigue par cycle équivalent à la figure 5 est calculé comme suit :

$$D_{par\ fatigue\ par\ cycle} = \frac{NST}{ND} \sum_{sollicitation\ de\ début\ de\ vissage}^{sollicitation\ de\ fin\ de\ vissage} 1/N_{ci}$$

Avec:

$N_{ci}$ : nombre de cycle avant rupture pour la contrainte subie par la dent pour la sollicitation donnée.

NST : nombre de fois où la dent considérée est sollicitée par tour d'engrenage

ND : nombre de dent dans l'engrenage

Lorsque le composant pris en considération est un arbre soumis à une flexion rotative, les calculs sont les mêmes. La période angulaire prédéterminée d'enregistrement des sollicitations correspond à un tour de rotation de l'arbre considéré et les valeurs ND et NST valent 1.

Puis, à l'issue de chaque cycle, on déterminera le dommage par fatigue comme étant le cumul des dommages par fatigue par cycle des cycles précédents, y inclus le cycle qui vient de s'achever. Il s'agit d'un dommage global sur l'ensemble des cycles de travail pris en considération.

Pour chaque dommage, c'est-à-dire par composant ou sous-ensemble, un seuil d'alerte sera déterminé au-delà duquel il est considéré que le composant est endommagé.

### 6.2.3. Dommage par usure

Il est question ici de l'évaluation du dommage par usure que l'on considère équivalent au volume de particules arrachées aux différents composants de l'outil du fait du frottement.

Il est fait ici l'hypothèse que la loi d'Archard s'applique aux sollicitations en usure des outils industriels, notamment au glissement spécifique entre flancs de dentures d'engrenages parallèles et coniques.

En référence à la figure 7, le glissement spécifique d'une denture d'engrenage désigne le glissement entre les flancs de deux dents au niveau de leur point de contact. Ce glissement existe lorsque les dents entrent en contact puis diminue et devient nul lorsque le point de contact est aligné avec les centres des pignons puis augmente jusqu'à ce que les flancs ne soient plus en contact.

Ainsi, il peut être établi une relation entre l'abscisse curviligne du point de contact sur le flanc de denture et le glissement de ce point de contact (cf. figure 8).

Quant à la composante normale aux flancs de la force de contact entre dents, elle résulte :

- du couple induit par l'un des pignons et de la distance entre le point de contact et le centre de ce pignon ce qui détermine la composante tangentielle de la force de contact

- de la direction de la normale au flanc au point de contact

- du coefficient de frottement entre les flancs.

Cette composante normale évolue en amplitude au fur et à mesure que le point de contact se déplace sur le flanc de dent. Le profil de cet effort normal le long du flanc dépend de la géométrie du couple d'engrenages considérés et du couple transmis durant la sollicitation considérée.

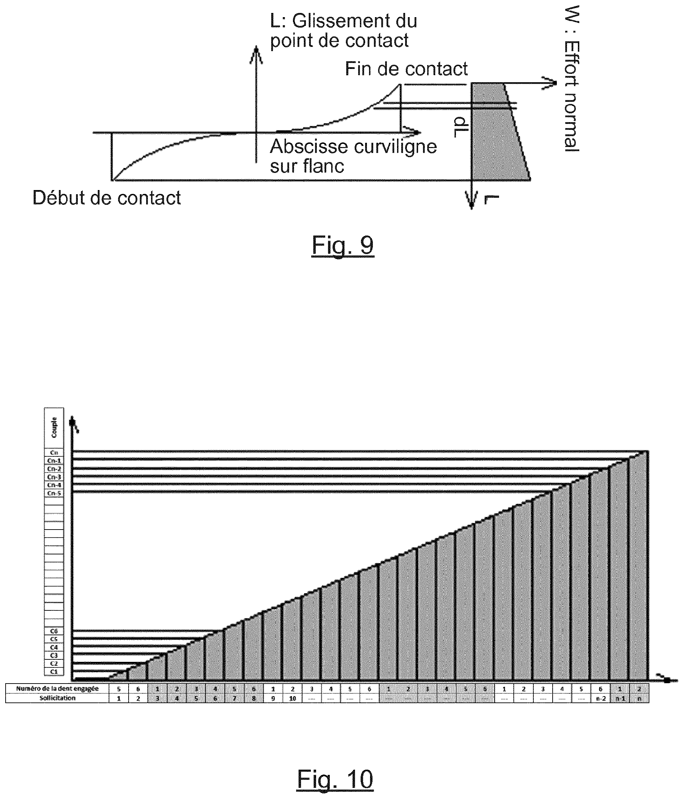

En référence à la figure 9, la loi de Archard appliquée au glissement spécifique sur une dent lors d'une sollicitation peut exprimer le volume d'usure q tel que :

$$q = (Ku/H) \int_{Début\ de\ flanc}^{Fin\ de\ flanc} w.dl$$

Avec:

w : force d'application d'une dent sur l'autre au point de contact

dl : distance de glissement incrémentale sur le flanc de dent

Ku : constante déterminée expérimentalement

H : dureté de la surface la plus tendre

Le terme $\int_{Début\ de\ flanc}^{Fin\ de\ flanc} w.dl$ , pour une dent donnée, ne dépend lui que du couple transmis par la dent lors de la sollicitation et donc peut s'exprimer sous la forme :

$$\int_{Début\ de\ flanc}^{Fin\ de\ flanc} w.dl = K_c.Cj$$

Avec:

Kc : constante dépendant de la conception de la transmission et calculable lors de la conception de l'outil ; elle est déterminée en fonction de la géométrie de la transmission et de ses composants

Cj : couple transmis par la dent lors de la sollicitation

q, volume d'usure d'une dent donnée soumis à une sollicitation donnée, ne dépend donc que de couple de cette sollicitation et peut s'exprimer de la façon suivante :

$$q = K_c.K_u.Cj/H$$

Ou encore :

$$q = Cj.K$$

Avec:

$$K = K_c.K_u/H$$

Comme pour le dommage en fatigue, au cours d'un cycle de travail de l'outil, on détermine pour chaque sollicitation du composant considéré, le dommage élémentaire occasionné par la contrainte à laquelle il est exposé au cours de cette sollicitation comme étant égale au produit du couple Cj mesuré au cours de cette sollicitation par la constante K.

Lorsque le composant considéré est une dent d'un pignon, on mesure pour cela le couple transmis par la transmission selon une période angulaire prédéterminée correspondant à la rotation du pignon d'un angle correspondant à une dent.

A l'issue du cycle de travail fourni par l'outil, le dommage moyen par cycle en usure équivalent à la figure 5 peut s'exprimer de la façon suivante :

$$D_{moyen\ par\ cycle\ en\ usure} = \frac{NST}{ND} \sum_{sollicitation\ de\ début\ de\ vissage}^{sollicitation\ de\ fin\ de\ vissage} Cj.K$$

Avec:

NST : nombre de fois où la dent considérée est sollicitée par tour d'engrenage
ND : nombre de dent dans l'engrenage

Puis, à l'issue de chaque cycle, on déterminera le dommage par usure sur une dent de pignon comme étant le cumul des dommages par usure par cycle des cycles précédents, y inclus le cycle qui vient de s'achever. Il s'agit d'un dommage global sur l'ensemble des cycles de travail pris en considération.

Pour chaque dommage, c'est-à-dire par composant ou sous-ensemble, un seuil d'alerte sera déterminé au-delà duquel il est considéré que le composant est endommagé.

Ainsi est calculé le dommage par usure sur une dent de pignon.

Concernant l'évaluation du dommage par usure d'un pallier, l'approche est différente des précédents dommages dans la mesure où l'usure se produit de façon continue durant tout le vissage. Il n'y a pas de sollicitation sur la base d'une période angulaire.

Le calcul du dommage par usure d'un pallier durant un vissage est réalisé de la façon suivante.Compte tenu de la loi de Archard, le dommage par usure sur un pallier est proportionnel à :

- la charge normale sur le palier qui est elle-même proportionnelle au couple mesuré par les moyens de mesure de couple de l'outil ;
- l'angle de rotation du satellite par rapport à son axe de pallier qui est lui-même proportionnel à l'angle mesuré par les moyens de mesure d'angle de l'outil.

Pour un cycle de travail, le dommage en usure sur un pallier pourra se calculer de la façon suivante :

$$D_{moyen\ en\ usure\ sur\ pallier} = K''.(Ku/H) \int_{Début\ de\ vissage}^{Fin\ de\ vissage} C.d\alpha$$

Avec:

C : Couple mesuré par les moyens de mesure de couple de l'outil
$d\alpha$: incrément d'angle mesuré par les moyens de mesure d'angle de l'outil
Ku : constante déterminée expérimentalement
H : dureté de la surface la plus tendre
K" : constante déterminée préalablement lors de la conception de l'outil par le calcul en fonction de la géométrie de la transmission et de ses composants

Soit :

$$D_{moyen\ en\ usure\ sur\ pallier} = K''' \int_{Début\ de\ vissage}^{Fin\ de\ vissage} C.d\alpha$$

Avec:

$$K''' = K''.(Ku/H)$$

Ou encore dans le cadre d'une méthode de calcul numérique :

$$D_{moyen\ en\ usure\ sur\ pallier} = K''' \sum_{début\ de\ vissage}^{fin\ de\ vissage} C.\Delta\alpha$$

Avec:

$\Delta\alpha$ : incrément d'angle

Comme pour les dommages précédents, le dommage par usure par cycle sur un pallier est ajouté à celui des cycles précédents pour obtenir le dommage global par usure du pallier.

Pour chaque dommage, un seuil d'alerte sera déterminé au-delà duquel il est considéré que le composant est endommagé.

### 6.2.4. Données issues de la conception de l'outil

Au cours de la conception de l'outil, on aura sélectionné, le ou les composants dont on souhaite suivre l'endommagement au cours de l'utilisation de celui-ci.

Selon la nature de l'endommagement au(x)quel(s) un composant est sensible, on suivra l'endommagement de celui-ci par usure et/ou par frottement.

Pour chacun de ces composants dont le dommage en fatigue est suivi, ont aura déterminé lors de la conception de l'outil :

- la période angulaire de relevée du couple :

  - pour une dent de pignon ce sera la période angulaire mesuré au niveau des moyens de mesure d'angle de l'outil correspondant à une rotation du pignon de la valeur d'une dent ;
  - pour un arbre soumis à une flexion rotative ce sera la période angulaire mesuré au niveau des moyens de mesure d'angle de l'outil correspondant à une rotation d'un tour de l'arbre ;

- le nombre de dents ND s'il s'agit d'un pignon ; s'il s'agit d'un arbre en flexion rotative ND vaut 1 ;
- le nombre de sollicitations NST par dent et par tour de pignon s'il s'agit d'un pignon ; s'il s'agit d'un arbre en flexion rotative NST vaut 1 ;
- sa constante de conversion du couple en contrainte K'
- sa courbe de Wöhler, (tableau de valeurs associant pour différentes valeurs de contrainte Ci, le nombre de cycles Nci au cours desquels le composant subit la contrainte Ci avant de rompre) ;
- un seuil d'alerte au-delà duquel le composant est considéré hors d'usage.

Pour chaque dent de pignon dont le dommage en usure est suivi, on aura déterminé lors de la conception de l'outil :

- la période angulaire de relevée du couple, ce sera la période angulaire mesuré au niveau des moyens de mesure d'angle de l'outil correspondant à une rotation du pignon de la valeur d'une dent ;
- le nombre de dents ND s'il s'agit d'un pignon ;
- le nombre de sollicitations NST par dent et par tour de pignon s'il s'agit d'un pignon ;
- sa constante de conversion du couple en dommage d'usure K ;
- un seuil d'alerte au-delà duquel le composant est considéré hors d'usage.

Pour chaque palier dont le dommage en usure est suivi, on aura déterminé lors de la conception de l'outil :

- la constante d'usure K'''.

Ces données sont enregistrées dans la mémoire de l'outil au cours d'une étape dite de paramétrage préalable.

### 6.3. Mise en œuvre du procédé

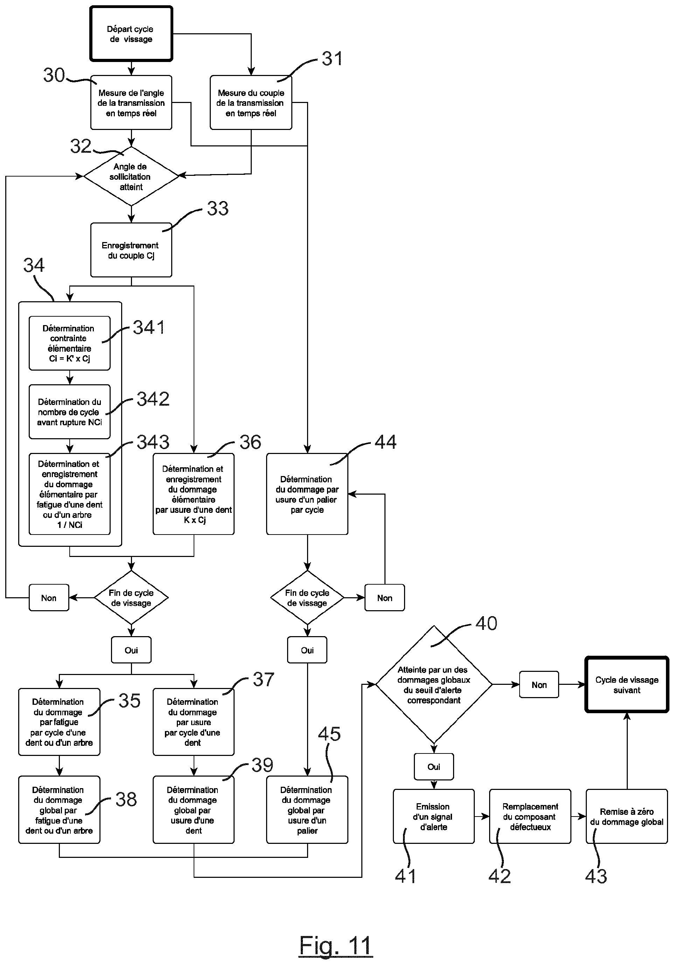

On présente à présent, en relation avec la figure 11, un exemple de procédé selon l'invention d'évaluation du dommage subi par un outil tournant qui est en l'occurrence une visseuse. Il est applicable à une perceuse ou à tout autre type d'outil tournant.

Dans cet exemple, on assure le suivi de l'endommagement de deux sous-ensembles de la visseuse, à savoir sa tête d'angle 19 et un train épicycloïdal 20.

Plus précisément, pour chacun de ces sous-ensembles, on choisi ici de suivre le composant le plus sollicité en fatigue et celui le plus sollicité en usure. Il pourrait être décidé de suivre seul l'un de ces composants, certains sous-ensembles ne comportant pas de composant sensible à l'un ou l'autre des types d'endommagement.

Le nombre et le type de sous-ensembles pris en considération sont donnés à titre d'exemple. Un seul sous-ensemble ou plus de deux pourraient être pris en considération. Des sous-ensembles autres qu'un engrenage de tête d'angle et les solaire et satellite du train épicycloïdal pourraient être pris en considération comme par exemple l'usure d'une couronne, la fatigue d'un arbre de sortie d'une tête d'angle etc.

| | | Composant le plus sollicité en fatigue | Période angulaire de relevé de couple | Nombre de dent de l'engrenage | Nombre de sollicitation par dent par tour d'engrenage | Constante de conversion du couple en contrainte | Courbe de Wohler | Constante de conversion du couple en dommage d'usure | Seuil d'alerte |
|---|---|---|---|---|---|---|---|---|---|
| Tête d'angle (sous ensemble 1) | Composant le plus sollicité en fatigue | A (pignon d'entrée) | $\alpha a$ | Xa | Ya | K'a | Wa (tableau de valeurs) | | ALa |
| | Composant le plus sollicité en usure | A (pignon d'entrée) | $\alpha a$ | Xa | Ya | | | Ka | AUa |
| Train épicycloïdal (Sous ensemble 2) | Composant le plus sollicité en fatigue | B (sattelite) | $\alpha b$ | Xb | Yb | K'b | Wb (tableau de valeurs) | | ALb |
| | Composant le plus sollicité en usure | C (solaire) | $\alpha c$ | Xc | Yc | | | Kc | Auc |

En référence au tableau 1 ci-dessus, le composant de la tête d'angle 19 le plus sensible à la fatigue l'est également à l'usure. Il s'agit ici du pignon d'entrée A de la tête d'angle 19.

Le composant du train épicycloïdal 20 le plus sensible à la fatigue est le satellite B alors que le composant le plus sensible à l'usure est le solaire C.

Pour chacun des composants suivis en fatigue, sont préalablement enregistrés dans la mémoire de l'outil :

- la période angulaire de relevée du couple : $\alpha a$ (pour le pignon A) et $\alpha b$ (pour le satellite B) ;
- le nombre de dents ND : Xa (pour le pignon A) et Xb (pour le satellite B) ;
- le nombre de sollicitations NST par dent et par tour de pignon : Ya (pour le pignon A) et Yb (pour le satellite B) ;
- sa constante de conversion du couple en contrainte K' : K'a (pour le pignon A) et K'b (pour le satellite B) ;
- sa courbe de Wöhler, (tableau de valeurs associant pour différentes valeur de contrainte Ci, le nombre de cycles Nci au cours desquels le composant subit la contrainte Ci avant de rompre) : Wa (pour le pignon A) et Wb (pour le satellite B) ;
- un seuil d'alerte au-delà duquel le composant est considéré hors d'usage : ALa (pour le pignon A) et ALb (pour le satellite B).

Pour chacun des composants suivis en usure, sont préalablement enregistrés dans la mémoire de l'outil :

- la période angulaire de relevée du couple : $\alpha a$ (pour le pignon A) et $\alpha c$ (pour le solaire C) ;
- le nombre de dents ND : Xa (pour le pignon A) et Xc (pour le solaire C) ;
- le nombre de sollicitations NST par dent et par tour de pignon : Ya (pour le pignon A) et Yc (pour le solaire C) ;
- sa constante de conversion du couple en dommage d'usure K : Ka (pour le pignon A) et Kc (pour le solaire C) ;
- un seuil d'alerte au-delà duquel le composant est considéré hors d'usage : AUa (pour le pignon A) et AUc (pour le solaire C).

Un procédé d'évaluation du dommage de la visseuse est mis en œuvre tout au long de la vie de celle-ci au cours de laquelle elle est utilisée pour réaliser une pluralité de cycles de vissage successifs. Un cycle de vissage correspond au serrage d'une vis ou d'un écrou.

Au cours de chaque cycle de vissage, sont mesurés en temps réel respectivement au moyen des moyens de mesure d'effort (en l'occurrence le capteur de couple 13) et des moyens de mesure de mouvement (en l'occurrence le capteur d'angle 15) :

- au moins une information représentative de l'angle de rotation de la transmission, en l'occurrence l'angle de rotation du rotor 120 par rapport au stator du moteur 121 (étape 30) suivant une périodicité prédéterminée ;
- au moins une information représentative du couple Cj supporté par la transmission (étape 31) correspondant à chacune des valeurs d'angle mesurée à l'étape précédente.

Chaque fois que le rotor 120 tourne d'un angle α correspondant à la période angulaire de sollicitation d'un composant dont le dommage est suivi (étape 32), le couple Cj mesuré à cet instant est enregistré dans la mémoire de l'outil (étape 33).

Pour les composants suivis en fatigue, le contrôleur détermine, à chaque sollicitation, la contrainte Ci subit par le composant (étape 341), en l'occurrence l'une de ses dents, à partir du couple mesuré C en appliquant la formule :

$$Ci = K'.Cj$$

En tenant compte de la fonction de Wöhler enregistrée dans sa mémoire, le contrôleur détermine ensuite le nombre de cycles à rupture Nci pour cette valeur de contrainte Ci (étape 342) puis le dommage élémentaire en fatigue correspondant 1/Nci (étape 343).

Ainsi le contrôleur détermine et enregistre à chaque sollicitation d'un composant suivi en fatigue, le dommage élémentaire correspondant (étape 34).

A la fin de chaque cycle, le contrôleur détermine (étape 35) le dommage par fatigue du cycle en appliquant la formule :

$$D_{par\,fatigue\,par\,cycle} = \frac{NST}{ND} \sum_{sollicitation\,de\,début\,de\,vissage}^{sollicitation\,de\,fin\,de\,vissage} 1/N_{ci}$$

En d'autres termes, il calcule la somme des dommages élémentaires par fatigue enregistrés au cours du cycle et la multiplie par NST/ND.

Ici les composants pris en considération sont des pignons si bien que NST et ND sont différents de 1. Si les composants pris en considération étaient des arbres, NST et ND seraient égaux à 1.

Pour les pignons suivis en usure et soumis à une sollicitation périodique, le contrôleur détermine et enregistre à chaque sollicitation sur la base de la valeur de ce couple mesuré Cj, le dommage élémentaire Cj.K correspondant (étape 36).

A la fin de chaque cycle, le contrôleur détermine et enregistre le dommage par usure du cycle en appliquant la formule (étape 37) :

$$D_{moyen\,par\,cycle\,en\,usure} = \frac{NST}{ND} \sum_{sollicitation\,de\,début\,de\,vissage}^{sollicitation\,de\,fin\,de\,vissage} Cj.K$$

Avec :

NST : nombre de fois où la dent considérée est sollicitée par tour d'engrenage.

ND : nombre de dent dans l'engrenage.

Lorsque le composant suivi en usure est un palier, le procédé comprend une étape 44 de détermination du dommage par usure du palier par cycle, à partir de la mesure de l'angle de la transmission (étape 30) et de la mesure du couple de la transmission (étape 31), puis une étape de détermination du dommage global par usure du palier (étape 45).

Pour un cycle comprenant n sollicitations, on obtient donc pour le composant A les données suivantes :

| Sollicitation | Angle de sollicitation | Couple | Nombre de cycle à rupture | Dommage en fatigue | Dommage en usure |
|---|---|---|---|---|---|
| 1 | αa | C1a | NC1a | 1/NC1a | C1a.K |
| 2 | 2.αa | C2a | NC2a | 1/NC2a | C2a.K |
| 3 | 3.αa | C3a | NC3a | 1/NC3a | C3a.K |
| 4 | 4.αa | C4a | NC4a | 1/NC4a | C4a.K |
| 5 | 5.αa | C5a | NC5a | 1/NC5a | C5a.K |
| ...... | | ...... | ...... | ...... | ...... |
| ...... | | ...... | ...... | ...... | ...... |
| ...... | | ...... | ...... | ...... | ...... |
| n-1 | (n-1).αa | C(n-1)a | NC(n-1)a | 1/NC(n-1)a | C(n-1)a.K |
| n | n.αa | Cna | Ncna | 1/Ncna | Cna.K |
| Dommage en fatigue du cycle de travail | | | | Dfa | ------ |
| Dommage en usure du cycle de travail | | | | ------ | Dua |

Pour un cycle comprenant n' sollicitations, on obtient donc pour le composant B les données suivantes :

| Sollicitation | Angle de sollicitation | Couple | Nombre de cycle à rupture | Dommage en fatigue | Dommage en usure |
|---|---|---|---|---|---|
| 1 | αb | C1b | NC1b | 1/NC1b | ------ |
| 2 | 2.αb | C2b | NC2b | 1/NC2b | ------ |
| 3 | 3.αb | C3b | NC3b | 1/NC3b | ------ |
| 4 | 4.αb | C4b | NC4b | 1/NC4b | ------ |
| 5 | 5.αb | C5b | NC5b | 1/NC5b | ------ |
| ...... | | ...... | ...... | ...... | ...... |
| ...... | | ...... | ...... | ...... | ...... |
| ...... | | ...... | ...... | ...... | ...... |
| n'-1 | (n'-1).αb | C(n'-1)b | NC(n'-1)b | 1/NC(n'-1)b | ------ |
| n' | n'.αb | Cn'b | NCn'b | 1/NCn'b | ------ |
| Dommage en fatigue du cycle de travail | | | | Dfb | ------ |
| Dommage en usure du cycle de travail | | | | | ------ |

Pour un cycle comprenant n" sollicitations, on obtient donc pour le composant C les données suivantes :

| Sollicitation | Angle de sollicitation | Couple | Nombre de cycle à rupture | Dommage en fatigue | Dommage en usure |
|---|---|---|---|---|---|
| 1 | αc | C1c | ------ | ------ | C1c.K |
| 2 | 2.αc | C2c | ------ | ------ | C2c.K |
| 3 | 3.αc | C3c | ------ | ------ | C3c.K |
| 4 | 4.αc | C4c | ------ | ------ | C4c.K |
| 5 | 5.αc | C5c | ------ | ------ | C5c.K |
| ...... | | ...... | ...... | ...... | ...... |
| ...... | | ...... | ...... | ...... | ...... |
| ...... | | ...... | ...... | ...... | ...... |
| n"-1 | (n"-1).αc | C(n"-1)c | ------ | ------ | C(n"-1)c.K |
| n" | n".αc | Cn"c | ------ | ------ | Cn"c.K |
| Dommage en fatigue du cycle de travail | | | | ------ | ------ |
| Dommage en usure du cycle de travail | | | | ------ | Duc |

A la fin de chaque cycle :

- le dommage global par fatigue de chaque composant suivi en fatigue est calculé (étape 38) en additionnant le dommage par fatigue du dernier cycle à la somme des dommages par fatigue des cycles précédents ;
- le dommage global par usure de chaque pignon suivi en usure est calculé (étape 39) en additionnant le dommage par usure du dernier cycle à la somme des dommages par usure des cycles précédents ;
- Le dommage global par usure d'un pallier suivi en usure est calculé en additionnant le dommage par usure du dernier cycle à la somme des dommages par usure des cycles précédents.

| | | Composant le plus sollicité en fatigue | Dommage global |
|---|---|---|---|
| Tête d'angle (sous ensemble 1) | Composant le plus sollicité en fatigue | A (pignon d'entrée) | ∑ Dfa |
| | Composant le plus sollicité en usure | A (pignon d'entrée) | ∑ Dua |
| Train épicycloïdal (Sous ensemble 2) | Composant le plus sollicité en fatigue | B (sattelite) | ∑Dfb |
| | Composant le plus sollicité en usure | C (solaire) | ∑Duc |

A la fin de chaque cycle :

- le dommage global par fatigue de chaque composant suivi en fatigue est comparé au seuil d'alerte correspondant ;
- le dommage global par usure de chaque composant suivi en usure est comparé au seuil d'alerte correspondant.

Dès que l'un des seuils d'alerte est atteint (étape 40), un message d'alerte est émis (étape 41). Il peut s'agir d'un message visuel et/ou sonore. Ce message d'alerte indique le composant dont le seuil d'alerte a été atteint de sorte que le service maintenance puisse remplacer le sous-ensemble, ou le composant, correspondant (étape 42).

Après le remplacement du sous-ensemble endommagé, le dommage global en usure et/ou le dommage global en fatigue du ou des composants de cet ensemble sont remis à zéro dans la mémoire de l'outil (étape 43).

Le procédé se répète ensuite.

L'exemple de procédé décrit ici est mis en œuvre dans le cadre d'un vissage. Il pourrait également être mis en œuvre dans le cadre d'un perçage ou autre.

## 6. Variantes

Les outils industriels de type visseuse ou perceuse font l'objet de validation lors de leur conception de différents tests. L'un de ces tests consiste à répéter avec un prototype de l'outil un cycle de travail type. Pour une visseuse, il peut s'agir d'un vissage, au couple maximum de la visseuse, d'un assemblage nécessitant une rotation de la vis d'un angle constant entre le placage de la vis et le couple maximum. Ce test est validé lorsque la visseuse a été capable de réaliser un nombre prédéterminé de serrage sans casser et sans que sa précision de serrage ne se dégrade.

La quantité de travail $E_T$ produite par la visseuse lors de ce test est calculable par la formule suivante :

$$E_T = NT . \sum_{début\ de\ vissage}^{fin\ de\ vissage} Cj . \Delta\alpha$$

Avec :

NT : nombre de vissage du test de durabilité
$\Delta\alpha$ : incrément d'angle
Cj : couple transmis par le composant

Ou encore :

$$E_T = NT . C_{max} . \alpha_{test} / 2$$

Avec

Cmax : couple maximum pour lequel l'outil a été conçu
$\alpha_{test}$ : angle de l'assemblage du test de durabilité de 0 N.m au Cmax

Le dommage par fatigue ou par usure grandit au cours du test de durabilité de façon proportionnelle à cette quantité de travail et atteint à la fin du test une valeur limite de référence.

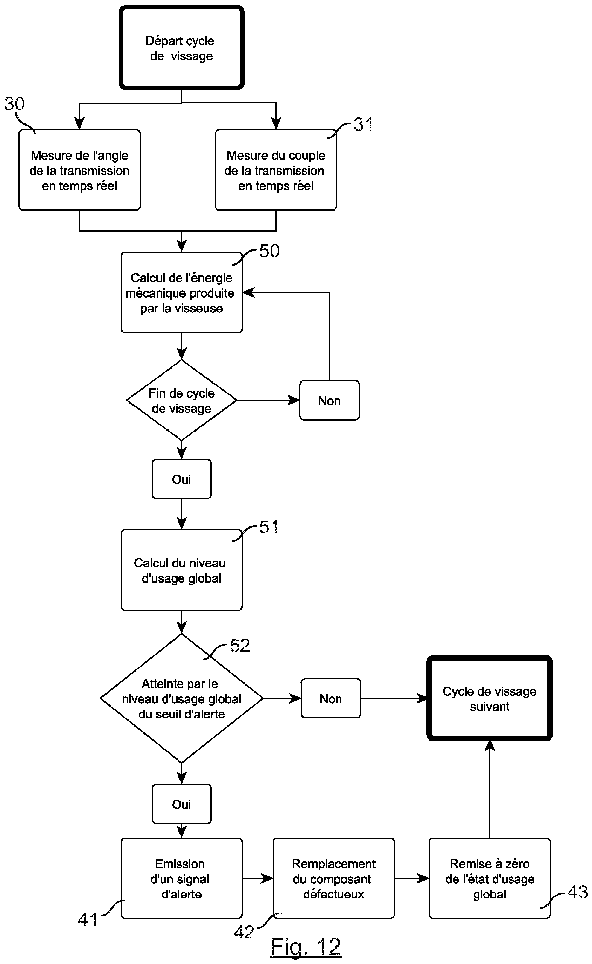

La figure 12 illustre une variante de procédé exploitant ce principe.

Selon cette variante, sont mesurés en temps réel respectivement au moyen des moyens de mesure d'effort (en l'occurrence le capteur de couple 13) et des moyens de mesure de mouvement (en l'occurrence le capteur d'angle 15) :

- au moins une information représentative de l'angle de rotation de la transmission, en l'occurrence l'angle de rotation du rotor 120 par rapport au stator du moteur 121 (étape 30) ;
- au moins une information représentative du couple Cj supporté par la transmission (étape 31).

Au cours de son utilisation en production, la quantité de travail produite par la visseuse à chaque cycle de vissage est calculée de la manière suivante (étape 50) :

$$\sum_{\textit{début de vissage}}^{\textit{fin de vissage}} Cj.\Delta\alpha$$

Puis la quantité de travail $E_V$ cumulée globale produite par la visseuse est ensuite calculée de la façon suivante (étape 51) :

$$E_V = \sum_{\textit{mise en service de l'outil}}^{\textit{dernier cycle de travail}} \sum_{\textit{début de vissage}}^{\textit{fin de vissage}} Cj.\Delta\alpha\,.$$

Cette valeur peut être comparée à l'énergie $E_T$ produite lors du test de durabilité pour évaluer son état d'usage tant en fatigue que en usure (étape 52).

Ceci est vrai sous réserve que la visseuse soit utilisée, comme dans le test de durabilité, à un niveau de couple proche de son maximum, sans quoi la quantité de travail n'est pas proportionnelle au dommage en fatigue.

L'angle des assemblages en production peut être lui différent de l'angle des vissages du test de durabilité, le dommage en fatigue étant proportionnel à cet angle.

Dès que l'un des seuils d'alerte est atteint (étape 52), un message d'alerte est émis (étape 41). Il peut s'agir d'un message visuel et/ou sonore. Ce message d'alerte indique le composant dont le seuil d'alerte a été atteint de sorte que le service maintenance puisse remplacer le sous-ensemble, ou le composant, correspondant (étape 42).

Après le remplacement du sous-ensemble endommagé, l'état d'usage global du ou des composants de cet ensemble sont remis à zéro dans la mémoire de l'outil (étape 53).

Dans des variantes, un dommage par fatigue ou par usure pourra donner lieu au calcul d'un état d'usage (ou taux d'usage) par fatigue ou d'un état d'usage par usure. L'état d'usage est égal au rapport en % entre le dommage et le seuil d'alerte prédéterminé correspondant au-delà duquel le composant considéré doit être remplacé.

Dans la variante consistant à prendre en considération le travail fourni par l'outil, l'état d'usage pourra être calculé de la façon suivante :

$$Etat\ d'usage = 100.E_V/(Coeficient\ de\ sécurité.E_T)$$

Dans ce cas, un signal d'alerte sera émis lorsque la valeur de l'état d'usage s'approchera de 100.

L'invention peut alors permettre d'évaluer l'accroissement des taux d'usage provoqués par chaque travail réalisé par l'outil, tel que vissage ou perçage, et à les cumuler pour former des taux d'usage globaux représentatifs de l'état de l'outil.

Après calcul des dommages globaux les tableaux contenant les couples des sollicitations sont écrasés par l'évaluation du dommage résultant du cycle de travail suivant, seul les dommages globaux sont conservés pour être comparés aux seuils d'alerte et générer une alerte le cas échéant.

L'évaluation des dommages pour un cycle de travail à couple constant (par exemple perçage) est identique à celui pour un cycle de travail à couple variable (par exemple vissage).

Une courbe de Wöhler peut être enregistrée sous la forme d'un tableau de points liant contraintes et nombre de cycles avant rupture. L'identification d'un nombre de cycles avant rupture pour une contrainte particulière pourra être obtenue en faisant une interpolation entre deux points du tableau encadrant la valeur de contrainte.

Les unités utilisées dans ce procédé sont les suivantes :

- couple en N.m
- contraintes en Mpa
- période angulaire ou angle de sollicitation : degré
- nombre de cycle avant rupture : sans dimension
- dommage par fatigue : sans dimension
- dommage par usure : $mm^3$
- énergie : J

Les différentes grandeurs sont calculées de la façon suivante :

- période angulaire : elle est mesurée au niveau des moyens de mesure d'angle (capteur d'angle moteur), pour une dent de pignon elle correspond à l'angle de rotation au niveau des moyens de mesure d'angle pour faire un tour de pignon divisé par le nombre de dent dudit pignon.
- angle de sollicitation : c'est l'angle absolu mesuré au niveau des moyens de mesure d'angle après des rotations successives de la valeur d'une période angulaire
- K' constante de conversion du couple en contrainte :

  - d'une part, grâce à sa conception indéformable et fixe, les couples transmis dans une visseuse évoluent de façon proportionnelle au couple mesuré par les moyens de mesure de couple de l'outil.
  - d'autre part la contrainte maximum subie par une dent lors son engagement avec une autre dent est proportionnelle au couple transmis par le pignon. Cette proportionnalité entre couple et contrainte est évaluable grâce à un logiciel de calcul par élément fini.
  - il est donc possible d'en déduire la constante K' de proportionnalité entre le couple mesuré par les moyens de mesure de couple de l'outil et la contrainte maximum subie par la dent.

- Courbe de Wöhler: elles sont propres à la matière choisie pour réaliser le composant, elles peuvent être fiabilisées par des tests de fatigue sur composants réels en laboratoire.
- K constante de conversion du couple en dommage d'usure :

  - cette constante peut être évaluée par des tests en laboratoire. Pour un pignon donné, ces tests, peuvent consister à faire tourner ce pignon avec son voisin dans l'outil sous une charge de couple constante et de façon périodique à mesurer le volume de matière usé, soit par mesure dimensionnelle soit par mesure de la diminution de la masse.
  - la constante K peut ensuite être déduite de la diminution de masse divisé par le nombre d'engagement de dents lors du test et rapporté au couple qui serait mesurable au niveau des moyens de mesure de couple de l'outil pour un couple transmis au niveau du pignon équivalent à celui du test.

Le dommage d'un composant est bien entendu représentatif de l'endommagement de ce composant. Lorsque le composant fait partie d'un sous-ensemble, ce dommage est représentatif du dommage (endommagement) de ce sous-ensemble. Ce dommage est également représentatif di dommage (endommagement) de l'outil auquel appartient le composant.

## Revendications

1. Procédé d'évaluation d'un dommage par fatigue et/ou d'un dommage par usure d'un outil tournant comprenant des moyens moteurs, une transmission comprenant une pluralités de composants, et un organe terminal, ledit organe terminal étant susceptible d'être entrainé en rotation et/ou en translation par lesdits moyens moteurs via ladite transmission,

   ledit procédé comprend au moins :

      - une étape de détermination d'au moins une information représentative du couple supporté par ladite transmission ;

- une étape de détermination d'au moins une information représentative de l'angle de rotation de ladite transmission ;
- une étape de détermination, en fonction dudit couple et dudit angle de rotation, d'un dommage par fatigue et/ou d'un dommage par usure d'au moins un desdits composants,

**caractérisé en ce que**

ledit dommage par fatigue et/ou ledit dommage par usure étant proportionnel à la quantité de travail fournie par ledit outil pour entrainer en mouvement ledit organe terminal durant la vie de l'outil, cette quantité de travail étant calculée pour au moins un composant par l'intégrale du couple transmis par ce composant en fonction de l'angle de rotation de ce même composant,

ou

ledit procédé étant mis en œuvre au cours de cycles successifs d'utilisation dudit outil, ledit procédé comprenant au moins :

- une étape de détermination, au cours de chacun desdits cycles d'utilisation et en fonction dudit couple et dudit angle de rotation au cours du cycle considéré, d'au moins un dommage par fatigue par cycle et/ou un dommage par usure par cycle d'au moins un desdits composants pour le cycle considéré ;
- une étape de détermination d'un dommage par fatigue et/ou d'un dommage par usure dudit outil tournant ou dudit au moins un composant, correspondant chacun au cumul desdits dommages par fatigue par cycle et/ou au cumul desdits dommages par usure par cycle au cours de l'ensemble des cycles considérés pour ledit au moins un composants,

ladite étape de détermination dudit dommage par fatigue d'au moins un desdits composants au cours d'un cycle comprend la mise en œuvre selon une période angulaire prédéterminée au cours ou à l'issue dudit cycle :

- d'une étape de détermination de la valeur de la contrainte Ci à laquelle ledit composant est soumis ;
- d'une étape de détermination à partir de la contrainte Ci du nombre de cycles NCi avant rupture susceptibles d'être réalisés par ledit composant en tenant compte d'une lois mathématique prédéterminée, propre au matériau dans lequel est réalisé ledit composant, exprimant la contrainte Ci à laquelle est exposé le composant en fonction du nombre de cycles NCi susceptible d'être réalisés par ledit composant exposé à cette contrainte avant qu'il ne rompe ;
- d'une étape de détermination d'un dommage élémentaire par fatigue comme étant égale à 1/NCi.

2. Procédé selon la revendication 1 dans lequel ladite étape de détermination dudit dommage par fatigue et/ou dudit dommage par usure comprend une étape de comparaison dudit au moins un dommage par fatigue et/ou dudit dommage par usure avec un seuil d'alerte prédéterminé au-delà duquel le composant particulier considéré doit être remplacé, ledit procédé comprenant une étape d'émission d'une alerte dès que l'un desdits dommages d'un desdits composants atteint le seuil d'alerte prédéterminé correspondant.

3. Procédé selon la revendication 1 ou 2 dans lequel ladite étape de détermination de dommage par fatigue par cycle d'au moins un desdits composants au cours d'un cycle est telle que :

- ledit composant pris en considération est une dent d'un pignon,
- ladite période angulaire prédéterminée correspond à la rotation du pignon d'un angle correspondant à une dent,
- le dommage par fatigue par cycle est égal à la somme des dommages élémentaires par fatigue déterminés au cours du cycle sur la base de ladite période angulaire multiplié par le nombre de fois où ladite dent est sollicitée par tour de pignon et divisé par le nombre de dents dudit pignon.

4. Procédé selon l'une quelconque des revendications 1 à 3 dans lequel ladite étape de détermination de dommage par fatigue par cycle d'au moins un desdits composants au cours d'un cycle est telle que :

- ledit composant pris en considération est un arbre soumis à une flexion rotative,
- ladite période angulaire prédéterminée correspond à un tour de rotation dudit arbre,
- le dommage par fatigue par cycle est égal à la somme des dommages élémentaires par fatigue déterminés au cours du cycle sur la base de ladite période.

5. Procédé selon l'une quelconque des revendications 1 à 4 dans lequel ladite étape de détermination dudit dommage par usure d'au moins un desdits composants au cours d'un cycle comprend la mise en œuvre selon une période angulaire prédéterminée au cours ou à l'issue dudit cycle :

- d'une étape de détermination de la valeur du couple Cj transmis par ledit composant ;
- d'une étape de détermination d'un dommage élémentaire par usure comme étant égale au produit du couple Cj par une constante prédéterminée.

6. Procédé selon la revendication 5 dans lequel ladite étape de détermination de dommage par usure par cycle d'au moins un desdits composants au cours d'un cycle est telle que :

- ledit composant pris en considération est une dent d'un pignon ;
- ladite période angulaire prédéterminée correspond à la rotation du pignon d'un angle correspondant à une dent ;
- le dommage par usure par cycle est égal à la somme des dommages élémentaires par usure déterminés au cours du cycle sur la base de ladite période multiplié par le nombre de fois où ladite dent est sollicitée par tour de pignon et divisé par le nombre de dents dudit pignon.

7. Procédé selon l'une quelconque des revendications 1 à 6 comprenant une étape de détermination d'au moins un état d'usage par fatigue et/ou d'un état d'usage par usure dudit outil ou dudit composant, ledit état d'usage par fatigue et/ou ledit état d'usage par usure étant égal au rapport en % entre le dommage par fatigue et le seuil d'alerte par fatigue et/ou entre le dommage par usure et le seuil d'alerte par usure prédéterminé au-delà duquel ledit composant doit être remplacé.

8. Procédé selon la revendication 1 ou 2 dans lequel ledit seuil d'alerte prédéterminé correspond à la quantité de travail fournie par ledit outil pour satisfaire au test de durabilité effectué lors de sa validation technique.

9. Dispositif d'évaluation d'un dommage par fatigue et/ou d'un dommage par usure d'un outil tournant comprenant des moyens moteurs, une transmission comprenant une pluralités de composants, et un organe terminal, ledit organe terminal étant susceptible d'être entrainé en rotation et/ou en translation par lesdits moyens moteurs via ladite transmission,

ledit dispositif comprend au moins :

- des moyens de détermination d'au moins une information représentative du couple supporté par ladite transmission ;
- des moyens de détermination d'au moins une information représentative de l'angle de rotation de ladite transmission ;
- des moyens de détermination, en fonction dudit couple et dudit angle de rotation, d'un dommage par fatigue et/ou d'un dommage par usure d'au moins un desdits composants,

**caractérisé en ce que**
ledit dommage par fatigue et/ou ledit dommage par usure est proportionnel à la quantité de travail fournie par ledit outil pour entrainer en mouvement ledit organe terminal durant la vie de l'outil, cette quantité de travail étant calculée pour au moins un composant par l'intégrale du couple transmis par ce composant en fonction de l'angle de rotation de ce même composant,
ou
ledit dispositif comprenant des moyens pour être mis en œuvre au cours de cycles successifs d'utilisation dudit outil, ledit dispositif comprenant au moins :

- des moyens de détermination, au cours de chacun desdits cycles d'utilisation et en fonction dudit couple et dudit angle de rotation au cours du cycle considéré, d'au moins un dommage par fatigue par cycle et/ou un dommage par usure par cycle dudit outil et/ou d'au moins un desdits composants pour le cycle considéré ;
- des moyens de détermination d'un dommage par fatigue et/ou d'un dommage par usure, correspondant chacun au cumul desdits dommages par fatigue par cycle et/ou au cumul desdits dommages par usure par cycle au cours de l'ensemble des cycles considérés pour ledit au moins un composants,

dans lequel lesdits moyens de détermination dudit dommage par fatigue d'au moins un desdits composants au cours d'un cycle comprennent des moyens pour mettre en œuvre selon une période angulaire prédéterminée au cours ou à l'issue dudit cycle :

- des moyens de détermination de la valeur de la contrainte Ci à laquelle ledit composant est soumis ;
- des moyens de détermination à partir de la contrainte Ci du nombre de cycles NCi avant rupture susceptibles d'être réalisés par ledit composant en tenant compte d'une lois mathématique prédéterminée, propre au matériau dans lequel est réalisé ledit composant, exprimant la contrainte Ci à laquelle est exposé le composant en fonction du nombre de cycles NCi susceptible d'être réalisés par ledit composant exposé à cette contrainte avant qu'il ne rompe ;
- des moyens de détermination d'un dommage élémentaire par fatigue comme étant égale à 1/NCi.

**10.** Dispositif selon la revendication 9 dans lequel lesdits moyens de détermination dudit dommage par fatigue et/ou dudit dommage par usure comprennent des moyens de comparaison dudit au moins un dommage par fatigue et/ou dudit dommage par usure avec un seuil d'alerte prédéterminé au-delà duquel le composant particulier considéré doit être remplacé, ledit dispositif comprenant des moyens d'émission d'une alerte dès que l'un desdits dommages d'un desdits composants atteint le seuil d'alerte prédéterminé correspondant.

**11.** Dispositif selon la revendication 9 ou 10 dans lequel lesdits moyens de détermination de dommage par fatigue par cycle d'au moins un desdits composants au cours d'un cycle sont configurés de telle sorte que :

- ledit composant pris en considération est une dent d'un pignon,
- ladite période angulaire prédéterminée correspond à la rotation du pignon d'un angle correspondant à une dent,
- le dommage par fatigue par cycle est égal à la somme des dommages élémentaires par fatigue déterminés au cours du cycle sur la base de ladite période angulaire multiplié par le nombre de fois où ladite dent est sollicitée par tour de pignon et divisé par le nombre de dents dudit pignon.

**12.** Dispositif selon la revendication 11 dans lequel lesdits moyens de détermination de dommage par fatigue par cycle d'au moins un desdits composants au cours d'un cycle sont configurés de telle sorte que :

- ledit composant pris en considération est un arbre soumis à une flexion rotative,
- ladite période angulaire prédéterminée correspond à un tour de rotation dudit arbre,
- le dommage par fatigue par cycle est égal à la somme des dommages élémentaires par fatigue déterminés au cours du cycle sur la base de ladite période.

**13.** Dispositif selon l'une quelconque des revendications 9 ou 10 dans lequel lesdits moyens de détermination de dommage par usure d'au moins un desdits composants au cours d'un cycle sont configurés pour mettre en œuvre selon une période angulaire prédéterminée au cours ou à l'issue dudit cycle :

- des moyens de détermination de la valeur du couple Cj transmis par ledit composant;
- des moyens de détermination d'un dommage élémentaire par usure comme étant égale au produit du couple Cj par une constante prédéterminée.

**14.** Dispositif selon la revendication 13 dans lequel lesdits moyens de détermination de dommage par usure par cycle d'au moins un desdits composants au cours d'un cycle sont configurés de telle sorte que :

- ledit composant pris en considération est une dent d'un pignon ;
- ladite période angulaire prédéterminée correspond à la rotation du pignon d'un angle correspondant à une dent ;
- le dommage par usure par cycle est égal à la somme des dommages élémentaires par usure déterminés au cours du cycle sur la base de ladite période angulaire multiplié par le nombre de fois où ladite dent est sollicitée par tour de pignon et divisé par le nombre de dents dudit pignon.

**15.** Dispositif selon l'une quelconque des revendications 9 à 14 comprenant des moyens de détermination d'au moins un état d'usage par fatigue et/ou d'un état d'usage par usure dudit outil ou dudit composant, ledit état d'usage par fatigue et/ou ledit état d'usage par usure étant égal au rapport en % entre le dommage par fatigue et le seuil d'alerte par fatigue et/ou entre le dommage par usure et le seuil d'alerte par usure prédéterminé au-delà duquel ledit composant doit être remplacé.

**16.** Dispositif selon la revendication 9 dans lequel ledit seuil d'alerte prédéterminé correspond à la quantité de travail fournie par ledit outil pour satisfaire au test de durabilité effectué lors de sa validation technique.

**Patentansprüche**

1. Verfahren zur Bewertung eines ermüdungsbedingten Schadens und/oder eines verschleißbedingten Schadens eines drehenden Werkzeugs, das Antriebsmittel, ein Getriebe, das eine Vielzahl von Bauteilen umfasst, und ein Endelement umfasst, wobei das Endelement von den Antriebsmitteln über das Getriebe rotatorisch und/oder translatorisch angetrieben werden kann,

   wobei das Verfahren mindestens umfasst:

   - einen Schritt der Bestimmung mindestens einer Information, die für das vom Getriebe getragene Drehmoment repräsentativ ist;
   - einen Schritt der Bestimmung mindestens einer Information, die für den Drehwinkel des Getriebes repräsentativ ist;
   - einen Schritt der Bestimmung, in Abhängigkeit von dem Drehmoment und dem Drehwinkel, eines ermüdungsbedingten Schadens und/oder eines verschleißbedingten Schadens mindestens eines der Bauteile,

   **dadurch gekennzeichnet**, der ermüdungsbedingte Schaden und/oder der verschleißbedingte Schaden proportional zu der Arbeitsmenge ist bzw. sind, die von dem Werkzeug aufgebracht wird, um das Endelement während der Lebensdauer des Werkzeugs zu bewegen, wobei diese Arbeitsmenge für mindestens ein Bauteil durch das Integral des von diesem Bauteil übertragenen Drehmoments in Abhängigkeit von dem Drehwinkel desselben Bauteils berechnet wird,
   oder
   das Verfahren während aufeinanderfolgender Verwendungszyklen des Werkzeugs durchgeführt wird, wobei das Verfahren mindestens umfasst:

   - einen Schritt der Bestimmung, während jedes der Verwendungszyklen und in Abhängigkeit von dem Drehmoment und dem Drehwinkel während des betrachteten Zyklus, mindestens eines ermüdungsbedingten Schadens je Zyklus und/oder eines verschleißbedingten Schadens je Zyklus mindestens eines der Bauteile für den betrachteten Zyklus;
   - einen Schritt der Bestimmung eines ermüdungsbedingten Schadens und/oder eines verschleißbedingten Schadens des drehenden Werkzeugs oder des mindestens einen Bauteils, entsprechend jeweils der Summe der ermüdungsbedingten Schäden je Zyklus und/oder der Summe der verschleißbedingen Schäden je Zyklus während der Gesamtheit der betrachteten Zyklen für das mindestens eine Bauteil, wobei, dass

   der Schritt der Bestimmung des ermüdungsbedingten Schadens mindestens eines der Bauteile während eines Zyklus die Durchführung gemäß einer vorbestimmten Winkelperiode während des oder nach dem Zyklus umfasst:

   - eines Schritts der Bestimmung des Werts der Belastung Ci, mit der das Bauteil beansprucht wird;
   - eines Schritts der Bestimmung, ausgehend von der Belastung Ci, der Anzahl von Zyklen NCi vor einem Bruch, die von dem Bauteil ausgeführt werden können, unter Berücksichtigung einer vorbestimmten mathematischen Gesetzmäßigkeit, die spezifisch für den Werkstoff ist, aus dem das Bauteil ausgeführt ist, das die Belastung Ci, der das Bauteil ausgesetzt ist, in Abhängigkeit von der Anzahl von Zyklen NCi ausgedrückt wird, die von dem dieser Belastung ausgesetzten Bauteil ausgeführt werden können, bevor es bricht;
   - eines Schritts der Bestimmung eines elementaren ermüdungsbedingten Schadens als gleich 1/NCi.

2. Verfahren nach Anspruch 1, bei dem der Schritt der Bestimmung des ermüdungsbedingten Schadens und/oder des verschleißbedingten Schadens einen Schritt des Vergleichens des mindestens einen ermüdungsbedingten Schadens und/oder des verschleißbedingten Schadens mit einem vorbestimmten Warnschwellenwert umfasst, bei dessen Überschreitung das betrachtete besondere Bauteil ersetzt werden muss, wobei das Verfahren einen Schritt des Aussendens einer Warnung umfasst, sobald einer der Schäden eines der Bauteile den entsprechenden vorbestimmten Warnschwellenwert erreicht.

3. Verfahren nach Anspruch 1 oder 2, bei dem der Schritt der Bestimmung eines ermüdungsbedingten Schadens je Zyklus mindestens eines der Bauteile während eines Zyklus dergestalt ist, dass:

   - das betrachtete Bauteil ein Zahn eines Zahnrads ist,

- die vorbestimmte Winkelperiode der Drehung des Zahnrads um einen einem Zahn entsprechenden Winkel entspricht,
- der ermüdungsbedingte Schaden je Zyklus gleich der Summe der elementaren ermüdungsbedingten Schäden ist, die während des Zyklus auf der Grundlage der Winkelperiode bestimmt wurden, multipliziert mit der Anzahl der Male, mit welcher der Zahn je Zahnradumdrehung belastet wird, und dividiert durch die Zähnezahl des Zahnrads.

4. Verfahren nach einem der Ansprüche 1 bis 3, bei dem der Schritt der Bestimmung eines ermüdungsbedingten Schadens je Zyklus mindestens eines der Bauteile während eines Zyklus dergestalt ist, dass:

- das betrachtete Bauteil eine Welle ist, die auf Rotationsbiegenbeansprucht wird,
- die vorbestimmte Winkelperiode einer Umdrehung der Welle entspricht,
- der ermüdungsbedingte Schaden je Zyklus gleich der Summe der elementaren ermüdungsbedingten Schäden ist, die während des Zyklus auf der Grundlage der Periode bestimmt wurden.

5. Verfahren nach einem der Ansprüche 1 bis 4, bei dem der Schritt der Bestimmung des verschleißbedingten Schadens mindestens eines der Bauteile während eines Zyklus die Durchführung gemäß einer vorbestimmten Winkelperiode während des oder nach dem Zyklus umfasst:

- eines Schritts der Bestimmung des Werts des Drehmoments Cj, das von dem Bauteil übertragen wird;
- eines Schritts der Bestimmung eines elementaren verschleißbedingten Schadens als das Produkt aus dem Drehmoment Cj und einer vorbestimmten Konstante.

6. Verfahren nach Anspruch 5, bei dem der Schritt der Bestimmung eines verschleißbedingten Schadens je Zyklus mindestens eines der Bauteile während eines Zyklus dergestalt ist, dass:

- das betrachtete Bauteil ein Zahn eines Zahnrads ist;
- die vorbestimmte Winkelperiode der Drehung des Zahnrads um einen einem Zahn entsprechenden Winkel entspricht;
- der verschleißbedingte Schaden je Zyklus gleich der Summe der elementaren verschleißbedingten Schäden ist, die während des Zyklus auf der Grundlage der Winkelperiode bestimmt wurden, multipliziert mit der Anzahl der Male, mit welcher der Zahn je Zahnradumdrehung belastet wird, und dividiert durch die Zähnezahl des Zahnrads.

7. Verfahren nach einem der Ansprüche 1 bis 6, umfassend einen Schritt der Bestimmung mindestens eines ermüdungsbedingten Gebrauchszustands und/oder eines verschleißbedingten Gebrauchszustands des Werkzeugs oder des Bauteils, wobei der ermüdungsbedingte Gebrauchszustand und/oder der verschleißbedingte Gebrauchszustand gleich dem Verhältnis in % zwischen dem ermüdungsbedingten Schaden und dem ermüdungsbedingten Warnschwellenwert und/oder zwischen dem verschleißbedingten Schaden und dem vorbestimmten verschleißbedingten Warnschwellenwert ist bzw. sind, bei dessen Überschreitung das Bauteil ersetzt werden muss.

8. Verfahren nach Anspruch 1 oder 2, bei dem der vorbestimmte Warnschwellenwert der Arbeitsmenge entspricht, die von dem Werkzeug aufgebracht wird, um die bei seiner technischen Freigabe durchgeführte Haltbarkeitsprüfung zu bestehen.

9. Vorrichtung zur Bewertung eines ermüdungsbedingten Schadens und/oder eines verschleißbedingten Schadens eines drehenden Werkzeugs, das Antriebsmittel, ein Getriebe, das eine Vielzahl von Bauteilen umfasst, und ein Endelement umfasst, wobei das Endelement von den Antriebsmitteln über das Getriebe rotatorisch und/oder translatorisch angetrieben werden kann,

wobei, dass die Vorrichtung mindestens umfasst:

- Mittel zur Bestimmung mindestens einer Information, die für das vom Getriebe getragene Drehmoment repräsentativ ist;
- Mittel zur Bestimmung mindestens einer Information, die für den Drehwinkel des Getriebes repräsentativ ist;
- Mittel zur Bestimmung, in Abhängigkeit von dem Drehmoment und dem Drehwinkel, eines ermüdungsbedingten Schadens und/oder eines verschleißbedingten Schadens mindestens eines der Bauteile,

**dadurch gekennzeichnet** der ermüdungsbedingte Schaden und/oder der verschleißbedingte Schaden proportional zu der Arbeitsmenge ist bzw. sind, die von dem Werkzeug aufgebracht wird, um das Endelement während der Lebensdauer des Werkzeugs zu bewegen, wobei diese Arbeitsmenge für mindestens ein Bauteil durch das Integral des von diesem Bauteil übertragenen Drehmoments in Abhängigkeit von dem Drehwinkel desselben Bauteils berechnet wird,

oder

die Vorrichtung Mittel umfasst, um während aufeinanderfolgender Verwendungszyklen des Werkzeugs eingesetzt zu werden, wobei die Vorrichtung mindestens umfasst:

- Mittel zur Bestimmung, während jedes der Verwendungszyklen und in Abhängigkeit von dem Drehmoment und dem Drehwinkel während des betrachteten Zyklus, mindestens eines ermüdungsbedingten Schadens je Zyklus und/oder eines verschleißbedingten Schadens je Zyklus des Werkzeugs und/oder mindestens eines der Bauteile für den betrachteten Zyklus;
- Mittel zur Bestimmung eines ermüdungsbedingten Schadens und/oder eines verschleißbedingten Schadens, entsprechend jeweils der Summe der ermüdungsbedingten Schäden je Zyklus und/oder der Summe der verschleißbedingten Schäden je Zyklus während der Gesamtheit der betrachteten Zyklen für das mindestens eine Bauteil,

wobei, dass die Mittel zur Bestimmung des ermüdungsbedingten Schadens mindestens eines der Bauteile während eines Zyklus Mittel umfassen, um gemäß einer vorbestimmten Winkelperiode während des oder nach dem Zyklus einzusetzen:

- Mittel zur Bestimmung des Werts der Belastung Ci, mit der das Bauteil beansprucht wird;
- Mittel zur Bestimmung, ausgehend von der Belastung Ci, der Anzahl von Zyklen NCi vor einem Bruch, die von dem Bauteil ausgeführt werden können, unter Berücksichtigung einer vorbestimmten mathematischen Gesetzmäßigkeit, die spezifisch für den Werkstoff ist, aus dem das Bauteil ausgeführt ist, das die Belastung Ci, der das Bauteil ausgesetzt ist, in Abhängigkeit von der Anzahl von Zyklen NCi ausgedrückt wird, die von dem dieser Belastung ausgesetzten Bauteil ausgeführt werden können, bevor es bricht;
- Mittel zur Bestimmung eines elementaren ermüdungsbedingten Schadens als gleich 1/NCi.

10. Vorrichtung nach Anspruch 9, bei der die Mittel zur Bestimmung des ermüdungsbedingten Schadens und/oder des verschleißbedingten Schadens Mittel zum Vergleichen des mindestens einen ermüdungsbedingten Schadens und/oder des verschleißbedingten Schadens mit einem vorbestimmten Warnschwellenwert umfassen, bei dessen Überschreitung das betrachtete besondere Bauteil ersetzt werden muss, wobei die Vorrichtung Mittel umfasst zum Aussenden einer Warnung, sobald einer der Schäden eines der Bauteile den entsprechenden vorbestimmten Warnschwellenwert erreicht.

11. Vorrichtung nach Anspruch 9 oder 10, bei der die Mittel zur Bestimmung eines ermüdungsbedingten Schadens je Zyklus mindestens eines der Bauteile während eines Zyklus so ausgelegt sind, dass:

- das betrachtete Bauteil ein Zahn eines Zahnrads ist,
- die vorbestimmte Winkelperiode der Drehung des Zahnrads um einen einem Zahn entsprechenden Winkel entspricht,
- der ermüdungsbedingte Schaden je Zyklus gleich der Summe der elementaren ermüdungsbedingten Schäden ist, die während des Zyklus auf der Grundlage der Winkelperiode bestimmt wurden, multipliziert mit der Anzahl der Male, mit welcher der Zahn je Zahnradumdrehung belastet wird, und dividiert durch die Zähnezahl des Zahnrads.

12. Vorrichtung nach Anspruch 11, bei der die Mittel zur Bestimmung eines ermüdungsbedingten Schadens je Zyklus mindestens eines der Bauteile während eines Zyklus so ausgelegt sind, dass:

- das betrachtete Bauteil eine Welle ist, die auf Rotationsbiegen beansprucht wird,
- die vorbestimmte Winkelperiode einer Umdrehung der Welle entspricht,
- der ermüdungsbedingte Schaden je Zyklus gleich der Summe der elementaren ermüdungsbedingten Schäden ist, die während des Zyklus auf der Grundlage der Periode bestimmt wurden.

13. Vorrichtung nach einem der Ansprüche 9 oder 10, bei der die Mittel zur Bestimmung des verschleißbedingten Schadens mindestens eines der Bauteile während eines Zyklus dazu ausgelegt sind, gemäß einer vorbestimmten Winkelperiode während des oder nach dem Zyklus einzusetzen:

- Mittel zur Bestimmung des Werts des Drehmoments Cj, das von dem Bauteil übertragen wird;
- Mittel zur Bestimmung eines elementaren verschleißbedingten Schadens als das Produkt aus dem Drehmoment Cj und einer vorbestimmten Konstante.

14. Vorrichtung nach Anspruch 13, bei der die Mittel zur Bestimmung eines verschleißbedingten Schadens je Zyklus mindestens eines der Bauteile während eines Zyklus so ausgelegt sind, dass:

- das betrachtete Bauteil ein Zahn eines Zahnrads ist;
- die vorbestimmte Winkelperiode der Drehung des Zahnrads um einen einem Zahn entsprechenden Winkel entspricht;
- der verschleißbedingte Schaden je Zyklus gleich der Summe der elementaren verschleißbedingten Schäden ist, die während des Zyklus auf der Grundlage der Winkelperiode bestimmt wurden, multipliziert mit der Anzahl der Male, mit welcher der Zahn je Zahnradumdrehung belastet wird, und dividiert durch die Zähnezahl des Zahnrads.

15. Vorrichtung nach einem der Ansprüche 9 bis 14, umfassend Mittel zur Bestimmung mindestens eines ermüdungsbedingten Gebrauchszustands und/oder eines verschleißbedingten Gebrauchszustands des Werkzeugs oder des Bauteils, wobei der ermüdungsbedingte Gebrauchszustand und/oder der verschleißbedingte Gebrauchszustand gleich dem Verhältnis in % zwischen dem ermüdungsbedingten Schaden und dem ermüdungsbedingten Warnschwellenwert und/oder zwischen dem verschleißbedingten Schaden und dem vorbestimmten verschleißbedingten Warnschwellenwert ist bzw. sind, bei dessen Überschreitung das Bauteil ersetzt werden muss.

16. Vorrichtung nach Anspruch 9, bei welcher der vorbestimmte Warnschwellenwert der Arbeitsmenge entspricht, die von dem Werkzeug aufgebracht wird, um die bei seiner technischen Freigabe durchgeführte Haltbarkeitsprüfung zu bestehen.

## Claims

1. Method for assessing fatigue damage and/or wear damage to a rotating tool comprising motor means, a transmission comprising a plurality of components, and a terminal member, said terminal member being capable of being driven in rotation and/or in translation by said motor means via said transmission, said method comprises at least:

- a step of determining at least one information representative of the torque applied to said transmission;
- a step of determining at least one information representative of the angle of rotation of said transmission;
- a step of determining, as a function of said torque and of said angle of rotation, a fatigue damage and/or a wear damage to at least one of said components, **characterised in that**

said fatigue damage and/or said wear damage being proportional to the amount of work provided by said tool to drive the motion of said terminal member during the life of the tool, this amount of work being calculated for at least one component by the integral of the torque transmitted by this component as a function of the angle of rotation of this component,
or
said method being carried out in successive cycles of use of said tool, said method comprising at least:

- a step of determining, during each of said cycles of use and as a function of said torque and of said angle of rotation during the cycle considered, at least one fatigue damage per cycle and/or one wear damage per cycle to at least one of said components for the cycle considered;
- a step of determining a fatigue damage and/or a wear damage to said rotating tool or to said at least one component, each corresponding to the accumulation of said fatigue damages per cycle and/or to the accumulation of said wear damages per cycle over all cycles considered for said at least one component, said step of determining said fatigue damage to at least one of said components during a cycle comprises carrying out, according to a predetermined angular period during or after said cycle:
- a step of determining the value of the stress Ci applied to said component;
- a step of determining, using the stress Ci, the number of cycles NCi before failure that can be carried out by said component, taking into account a predetermined mathematical law, specific to the material from which said component is made, expressing the stress Ci to which the component is exposed as a function of the number of cycles NCi that can be carried out by said component exposed to this stress before it fails;
- a step of determining an elementary fatigue damage as being equal to 1/NCi.

2. Method according to claim 1, wherein said step of determining said fatigue damage and/or said wear damage comprises a step of comparing said at least one fatigue damage and/or said wear damage with a predetermined alert threshold above which the specific component considered must be replaced, said method comprising a step of issuing an alert as soon as one of said damages to one of said components reaches the corresponding predetermined alert threshold.

3. Method according to claim 1 or 2, wherein said step of determining fatigue damage per cycle to at least one of said components during a cycle is such that:

- said component considered is a tooth of a pinion,
- said predetermined angular period corresponds to the rotation of the pinion by an angle corresponding to one tooth,
- the fatigue damage per cycle is equal to the sum of the elementary fatigue damages determined during the cycle on the basis of said angular period multiplied by the number of times said tooth is stressed per pinion revolution and divided by the number of teeth of said pinion.

4. Method according to any one of claims 1 to 3, wherein said step of determining fatigue damage per cycle to at least one of said components during a cycle is such that:

- said component considered is a shaft subjected to rotating bending,
- said predetermined angular period corresponds to one revolution of said shaft,
- the fatigue damage per cycle is equal to the sum of the elementary fatigue damages determined during the cycle on the basis of said period.

5. Method according to any one of claims 1 to 4, wherein said step of determining said wear damage to at least one of said components during a cycle comprises carrying out, according to a predetermined angular period during or after said cycle:

- a step of determining the value of the torque Cj transmitted by said component;
- a step of determining an elementary wear damage as being equal to the product of the torque Cj with a predetermined constant.

6. Method according to claim 5, wherein said step of determining wear damage per cycle to at least one of said components during a cycle is such that:

- said component considered is a tooth of a pinion;
- said predetermined angular period corresponds to the rotation of the pinion by an angle corresponding to one tooth;
- the wear damage per cycle is equal to the sum of the elementary wear damages determined during the cycle on the basis of said period multiplied by the number of times said tooth is stressed per pinion revolution and divided by the number of teeth of said pinion.

7. Method according to any one of claims 1 to 6, comprising a step of determining at least one fatigue working condition and/or one wear working condition of said tool or of said component, said fatigue working condition and/or said wear working condition being equal to the ratio in % of the fatigue damage to the fatigue alert threshold and/or of the wear damage to the predetermined wear alert threshold above which said component must be replaced.

8. Method according to claim 1 or 2, wherein said predetermined alert threshold corresponds to the amount of work provided by said tool to satisfy the durability test carried out during the technical validation thereof.

9. Device for assessing fatigue damage and/or wear damage to a rotating tool comprising motor means, a transmission comprising a plurality of components, and a terminal member, said terminal member being capable of being driven in rotation and/or in translation by said motor means via said transmission,

said device comprises at least:

- means for determining at least one information representative of the torque applied to said transmission;
- means for determining at least one information representative of the angle of rotation of said transmission;
- means for determining, as a function of said torque and of said angle of rotation, a fatigue damage and/or a wear damage to at least one of said components, **characterised in that**

said fatigue damage and/or said wear damage being proportional to the amount of work provided by said tool to drive the motion of said terminal member during the life of the tool, this amount of work being calculated for at least one component by the integral of the torque transmitted by this component as a function of the angle of rotation of this component,
or
said device comprising means for being carried out in successive cycles of use of said tool, said device comprising at least:

- means for determining, during each of said cycles of use and as a function of said torque and of said angle of rotation during the cycle considered, at least one fatigue damage per cycle and/or one wear damage per cycle to said tool and/or to at least one of said components for the cycle considered;
- means for determining a fatigue damage and/or a wear damage, each corresponding to the accumulation of said fatigue damages per cycle and/or to the accumulation of said wear damages per cycle over all cycles considered for said at least one component,

**characterised in that** said means for determining said fatigue damage to at least one of said components during a cycle comprise means for carrying out, according to a predetermined angular period during or after said cycle:

- means for determining the value of the stress $C_i$ applied to said component;
- means for determining, using the stress $C_i$, the number of cycles $NC_i$ before failure that can be carried out by said component, taking into account a predetermined mathematical law, specific to the material from which said component is made, expressing the stress $C_i$ to which the component is exposed as a function of the number of cycles $NC_i$ that can be carried out by said component exposed to this stress before it fails;
- means for determining an elementary fatigue damage as being equal to $1/NC_i$.

10. Device according to claim 9, wherein said means for determining said fatigue damage and/or said wear damage comprise means for comparing said at least one fatigue damage and/or said wear damage with a predetermined alert threshold above which the specific component considered must be replaced, said device comprising means for issuing an alert as soon as one of said damages to one of said components reaches the corresponding predetermined alert threshold.

11. Device according to claim 9 or 10, wherein said means for determining fatigue damage per cycle to at least one of said components during a cycle are configured such that:

- said component considered is a tooth of a pinion,
- said predetermined angular period corresponds to the rotation of the pinion by an angle corresponding to one tooth,
- the fatigue damage per cycle is equal to the sum of the elementary fatigue damages determined during the cycle on the basis of said angular period multiplied by the number of times said tooth is stressed per pinion revolution and divided by the number of teeth of said pinion.

12. Device according to claim 11, wherein said means for determining fatigue damage per cycle to at least one of said components during a cycle are configured such that:

- said component considered is a shaft subjected to rotating bending,
- said predetermined angular period corresponds to one revolution of said shaft,
- the fatigue damage per cycle is equal to the sum of the elementary fatigue damages determined during the cycle on the basis of said period.

13. Device according to any one of claims 9 or 10, wherein said means for determining wear damage to at least one of said components during a cycle are configured to carry out, according to a predetermined angular period during or after said cycle:

- means for determining the value of the torque Cj transmitted by said component;
- means for determining an elementary wear damage as being equal to the product of the torque Cj with a predetermined constant.

14. Device according to claim 13, wherein said means for determining wear damage per cycle to at least one of said components during a cycle are configured such that:

- said component considered is a tooth of a pinion;
- said predetermined angular period corresponds to the rotation of the pinion by an angle corresponding to one tooth;
- the wear damage per cycle is equal to the sum of the elementary wear damages determined during the cycle on the basis of said angular period multiplied by the number of times said tooth is stressed per pinion revolution and divided by the number of teeth of said pinion.

15. Device according to any one of claims 9 to 14, comprising means for determining at least one fatigue working condition and/or wear working condition of said tool or of said component, said fatigue working condition and/or wear working condition being equal to the ratio in % of the fatigue damage to the fatigue alert threshold and/or of the wear damage to the predetermined wear alert threshold above which said component must be replaced.

16. Device according to claim 9, wherein said predetermined alert threshold corresponds to the amount of work provided by said tool to satisfy the durability test carried out during the technical validation thereof.

18

16

10

15

12
120
121

13

T

20
C
B

19   11

A

Fig. 1

179   179   173
17   176
177

14
175

172   170   171   174

178

Fig. 2

Fig. 3

Fig. 4

Fig. 5

Fig. 6

Fig. 7

Fig. 8

Fig. 9

Fig. 10

Fig. 11

```
                    ┌─────────────────┐
                    │  Départ cycle   │
                    │   de vissage    │
                    └─────────────────┘
          ┌──────────────┴──────────────┐
  30      │                             │      31
  ┌───────────────────┐       ┌───────────────────┐
  │ Mesure de l'angle  │       │  Mesure du couple  │
  │ de la transmission │       │ de la transmission │
  │   en temps réel    │       │    en temps réel   │
  └───────────────────┘       └───────────────────┘
          └──────────────┬──────────────┘
                         │              50
              ┌────────────────────┐
              │ Calcul de l'énergie │◄───────────┐
              │ mécanique produite  │            │
              │   par la visseuse   │            │
              └────────────────────┘            │
                         │                       │
                      ◇─────◇           ┌─────────┐
                     Fin de cycle ─────►│   Non   │
                     de vissage         └─────────┘
                      ◇─────◇
                         │
                    ┌────────┐
                    │  Oui   │
                    └────────┘
                         │              51
              ┌────────────────────┐
              │  Calcul du niveau   │
              │   d'usage global    │
              └────────────────────┘
                         │              52
                    ◇──────────◇                        ┌─────────────────┐
                 Atteinte par le                        │ Cycle de vissage │
                 niveau d'usage global ──► ┌─────┐ ────► │     suivant      │
                 du seuil d'alerte         │ Non │       └─────────────────┘
                    ◇──────────◇           └─────┘               ▲
                         │                                       │
                    ┌────────┐                                   │
                    │  Oui   │                                   │
                    └────────┘                                   │
                         │                                       │
  ┌──────────────┐  ┌──────────────┐  ┌──────────────┐
  │   Emission    │  │ Remplacement  │  │ Remise à zéro │
  │  d'un signal  │─►│ du composant  │─►│ de l'état d'usage │
  │    d'alerte   │  │  défectueux   │  │    global     │
  └──────────────┘  └──────────────┘  └──────────────┘
       41                42                            43
```

Fig. 12

**EP 3 501 745 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102013016068 A1
- FR 2882287